(19) Europäisches Patentamt
European Patent Office
Office européen des brevets

(11) Veröffentlichungsnummer : **0 278 904 B1**

(12) # EUROPÄISCHE PATENTSCHRIFT

(45) Veröffentlichungstag der Patentschrift : **15.05.91 Patentblatt 91/20**

(51) Int. Cl.$^5$ : **C09B 62/503**, C09B 62/04, D06P 3/66

(21) Anmeldenummer : **88810054.2**

(22) Anmeldetag : **01.02.88**

(54) **Reaktivfarbstoffe, deren Herstellung und Verwendung.**

(30) Priorität : **06.02.87 CH 445/87**

(43) Veröffentlichungstag der Anmeldung : **17.08.88 Patentblatt 88/33**

(45) Bekanntmachung des Hinweises auf die Patenterteilung : **15.05.91 Patentblatt 91/20**

(84) Benannte Vertragsstaaten : **BE CH DE FR GB IT LI**

(56) Entgegenhaltungen :
**EP-A- 0 074 928**
**EP-A- 0 144 766**
**EP-A- 0 208 655**
**EP-A- 0 210 951**

(73) Patentinhaber : **CIBA-GEIGY AG**
**Klybeckstrasse 141**
**CH-4002 Basel (CH)**

(72) Erfinder : **Tzikas, Athanassios, Dr.**
**Muttenzerstrasse 78**
**CH-4133 Pratteln (CH)**
Erfinder : **Herzig, Paul**
**Ackerstrasse 52**
**CH-4057 Basel (CH)**

**EP 0 278 904 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder dem Kaltverweilverfahren eignen, und die nass- und lichtechte Färbungen ergeben ; sowie Verfahren zur Herstellung dieser Farbstoffe, und deren Verwendung zum Färben oder Bedrucken von textilen Materialien.

Gegenstand der Erfindung sind Reaktivfarbstoffe der Formel

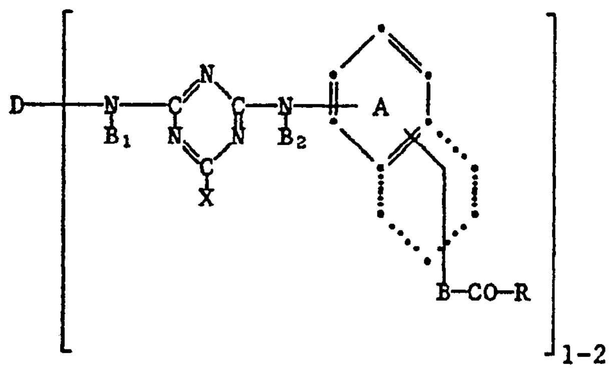

(1),

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes ; $B_1$ and $B_2$ unabhängig voneinander Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann ; X Fluor, Chlor, Brom, Sulfo, Alkylsulfonyl mit 1 bis 4 C-Atomen oder Phenylsulfonyl ; B ein Rest $-(CH_2)_n$ oder $-O-(CH_2)_n$, wobei, falls B ein Rest $-O-(CH_2)_n$ ist, B durch das Sauerstoffatom an das Ringsystem A gebunden ist, n = 1 bis 6 ; R ein Rest der Formel

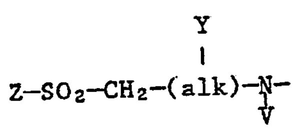

(1a)

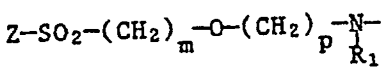

(1b)

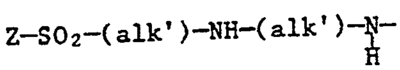

(1c)

oder 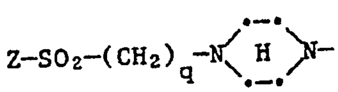

(1d);

Z β-Sulfatoäthyl, β-Thiosulfatoäthyl, β-Phosphatoäthyl, β-Acyloxyäthyl, β-Halogenäthyl oder Vinyl ; alk ein Alkylenrest mit 1 bis 6 C-Atomen oder dessen verzweigte Isomere ; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat ; V Wasserstoff oder ein Alkylrest mit 1 bis 4 C-Atomen, der durch Carboxy- oder Sulfogruppen oder durch deren Derivate, Alkoxygruppen mit 1 bis 2 C-Atomen, Halogen oder Hydroxy substituiert sein kann ; oder ein Rest

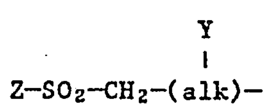

worin Z, alk und Y die angegebenen Bedeutungen haben ; $R_1$ Wasserstoff oder $C_{1-6}$-Alkyl ; alk' unabhängig voneinander Polymethylenreste mit 2 bis 6 C-Atomen oder deren verzweigte Isomere ; m = 1 bis 6, p = 1 bis

6 und q = 1 bis 6 ist ; und der Benzol- bzw. Naphthalinrest A weitersubstituiert sein kann durch Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl und Sulfo.

Der Rest D in Formel (1) kann an seinem Grundgerüst die bei organischen Farbstoffen üblichen Substituenten gebunden enthalten.

Als Beispiele für weitere Substituenten im Rest D seien genannt : Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N-N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktiv farbstoffe der Formel (1), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest $B_1$ bzw. $B_2$ ist, falls es sich um einen Alkylrest handelt, geradkettig oder verzweigt ; er kann weitersubstituiert sein, z.B. durch Halogen, Hydroxy, Cyan, $C_{1-4}$-Alkoxy, $C_{1-4}$-Alkoxycarbonyl, Carboxy, Sulfamoyl, Sulfo oder Sulfato. Als Beispiele für $B_1$ und $B_2$ seien die folgenden Reste genannt : Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $B_1$ bzw. $B_2$ Wasserstoff, Methyl oder Aethyl.

Der als Anion abspaltbare Substituent X ist ein Halogenatom, wie Fluor, Chlor oder Brom, eine niedrigmolekulare Alkylsulfonylgruppe, wie Methylsulfonyl oder Aethylsulfonyl, der Phenylsulfonylrest oder eine Sulfogruppe. Vorzugsweise ist X Fluor oder Chlor.

Der Rest B enthält 1 bis 6, vorzugsweise 1 bis 4 Kohlenstoffatome ; Beispiele für B sind : Methylen, Aethylen, Propylen, Butylen, Methylenoxy, Aethylenoxy, Propylenoxy und Butylenoxy.

Als β-Halogenäthyl kommt für Z insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen oder Butylen. Der Substituent Y ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl, N,N-Dimethyl- und N,N-Diäthylsulfamoyl, Methylsulfonyl, Aethylsulfonyl und Propylsulfonyl. Der Rest $R_1$ ist beispielsweise Methyl, Aethyl, Propyl, Isopropyl, Butyl, Isobutyl, sec-Butyl, tert-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4.

Das in Formel (1) innerhalb der eckigen Klammer stehende Ringsystem A bedeutet einen Benzol- oder Naphthalinkern. Als weitere Substituenten am Benzol- bzw. Naphthalinrest A kommen die gleichen in Betracht, die weiter oben bei der Erläuterung des Restes D genannt sind. Falls B einen Rest $-O\text{(}CH_2\text{)}_n$ darstellt, ist B durch das Sauerstoffatom an das Ringsystem A gebunden.

Ferner sind in Betracht zu ziehen, Reaktivfarbstoffe der Formel (1), worin der Rest D noch einen weiteren Reaktivrest einschliesst. Die zusätzlichen, in D eingeschlossenen Reaktivreste können über Aminogruppen oder in anderer Weise, z.B. durch eine direkte Bindung an D gebunden sein.

Der in eckige Klammern eingeschlossene Teil von Formel (1) ist ein Reaktivrest, welcher ein- oder zweimal im Molekül vorhanden sein kann ; beide Formelvarianten sind gleich wichtig. Falls zwei Reaktivreste vorhanden

sind, können diese gleich oder verschieden sein ; vorzugsweise sind beide Reste gleich.

Bevorzugte Ausführungsformen der Reaktivfarbstoffe der Formel (1) sind :

a) Reaktivfarbstoffe der Formel

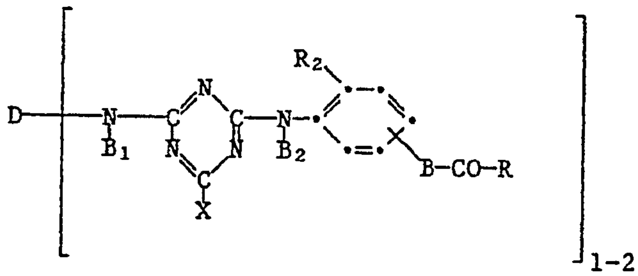

(2),

worin $R_2$ Wasserstoff, $C_{1-4}$-Alkyl, $C_{1-4}$-Alkoxy, Halogen, Hydroxy, Carboxy oder Sulfo ist ; und D, $B_1$, $B_2$, X, B und R die unter Formel (1) angegebenen Bedeutungen haben.

b) Reaktivfarbstoffe der Formel (1) oder (2), worin D der Rest eines Mono- oder Disazofarbstoffes ist.

c) Reaktivfarbstoffe der Formel (1) oder (2), worin D der Rest eines Metallkomplexazo- oder Formazanfarbstoffes ist.

d) Reaktivfarbstoffe der Formel (1) oder (2), worin D der Rest eines Anthrachinonfarbstoffes ist.

e) Reaktivfarbstoffe der Formel (1) oder (2), worin D der Rest eines Phthalocyaninfarbstoffes ist.

f) Reaktivfarbstoffe gemäss c), worin D der Rest eines 1 : 1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

g) Reaktivfarbstoffe gemäss b), worin D ein Mono- oder Disazofarbstoffrest der Formel

$$D_1\text{-N=N-(M-N=N)}_r\text{-K-} \quad (3A),$$

$$\text{-}D_1\text{-N=N-(M-N=N)}_r\text{-K-} \quad (3B,$$

$$\text{oder -}D_1\text{-N=N-(M-N=N)}_r\text{-K-} \quad (3C),$$

oder eines davon abgeleiteten Metallkomplexes ; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können ; r = 0 oder 1 ist ; und $D_1$, M und K zusammen mindestens zwei Sulfogruppen, vorzugsweise drei oder vier Sulfogruppen, enthalten.

h) Reaktivfarbstoffe gemäss b), worin D ein Disazofarbstoffrest der Formel

$$D_1\text{-N=N-K-N=N-}D_2\text{-} \quad (4A),$$

$$\text{oder -}D_1\text{-N=N-K-N=N-}D_2\text{-} \quad (4B),$$

$D_1$ und $D_2$ unabhängig voneinander der Rest einer Diazokomponente der Benzol- oder Naphthalinreihe, und K der Rest einer Kupplungskomponente der Naphthalinreihe ist ; wobei $D_1$, $D_2$ und K bei Azofarbstoffen übliche Substituenten, insbesondere Hydroxy-, Amino-, Methyl, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können ; und $D_1$, $D_2$ und K zusammen mindestens zwei Sulfogruppen, vorzugsweise drei oder vier Sulfogruppen enthalten.

i) Reaktivfarbstoffe gemäss d), worin D der Rest eines Anthrachinonfarbstoffes der Formel

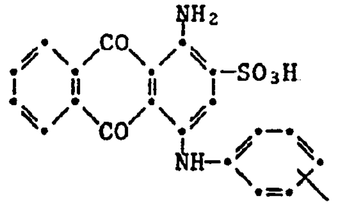

(5)

ist ; wobei der Anthrachinonkern durch eine weitere Sulfogruppe, und der Phenylenrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.

j) Reaktivfarbstoffe gemäss e), worin D der Rest eines Phthalocyaninfarbstoffes der Formel

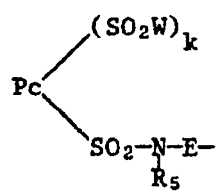

(6),

Pc der Rest eines Kupfer- oder Nickelphthalocyanins ; W –OH und/oder $-NR_3R_4$ ; $R_3$ und $R_4$ unabhängig voneinander Wasserstoff oder Alkyl mit 1 bis 4 Kohlenstoffatomen, das durch Hydroxy oder Sulfo substituiert sein kann ; $R_5$ Wasserstoff oder Alkyl mit 1 bis 4 Kohlenstoffatomen ; E ein Phenylenrest, der durch Alkyl mit 1 bis 4 C-Atomen, Halogen, Carboxy oder Sulfo substituiert sein kann ; oder ein Alkylenrest mit 2 bis 6 C-Atomen, vorzugsweise ein Sulfophenylen- oder Aethylenrest ; und k = 1 bis 3 ist.

Bevorzugt sind ferner Reaktivfarbstoffe gemäss g) oder h), der nachfolgenden Formeln (7) bis (15) :

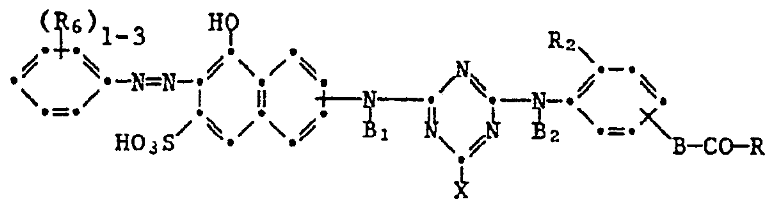

(7),

worin $R_6$ für 1 bis 3 Substituenten aus der Gruppe $C_{1-4}$-Alkyl, $C_{1-4}$-Alkoxy, Halogen, Carboxy und Sulfo steht; und $B_1$, $B_2$, X, B, R und $R_2$ die unter Formel (2) angegebenen Bedeutungen haben.

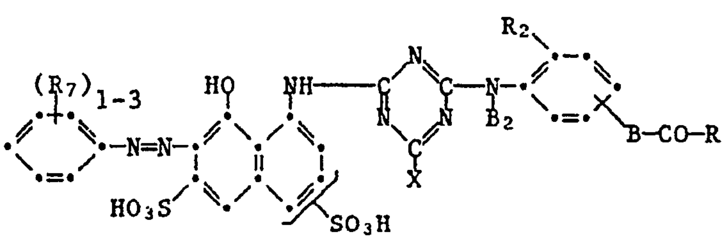

(8),

worin $R_7$ für 1 bis 3 Stubstituenten aus der Gruppe $C_{1-4}$-Alkyl, $C_{1-4}$-Alkoxy, Halogen, Carboxy und Sulfo steht; und $B_2$, X, B, R und $R_2$ die unter Formel (2) angegebenen Bedeutungen haben.

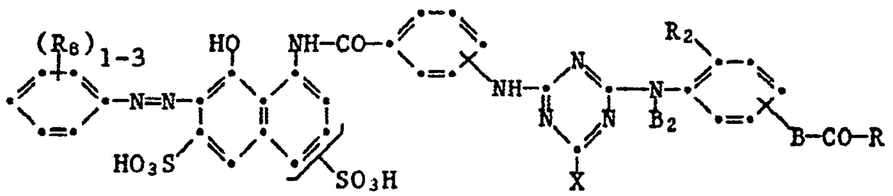

(9),

worin $R_8$ für 1 bis 3 Substituenten aus der Gruppe $C_{1-4}$-Alkyl, $C_{1-4}$-Alkoxy, Halogen, Carboxy und Sulfo steht; und $B_2$, X, B, R und $R_2$ die unter Formel (2) angegebenen Bedeutungen haben.

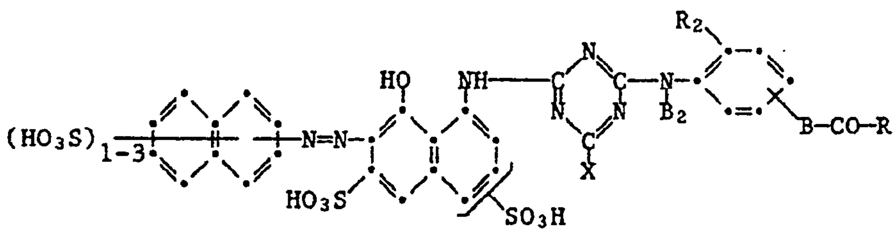

(10),

worin $B_2$, X, B, R und $R_2$ die unter Formel (2) angegebenen Bedeutungen haben.

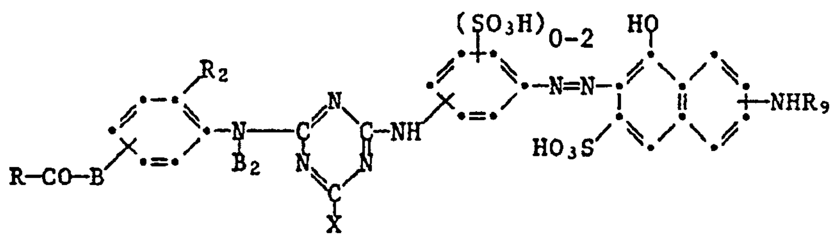

(11),

worin $R_9$ $C_{1-4}$-Alkanoyl oder Benzoyl ist ; und $B_2$, X, B, R und $R_2$ die unter Formel (2) angegebenen Bedeutungen haben.

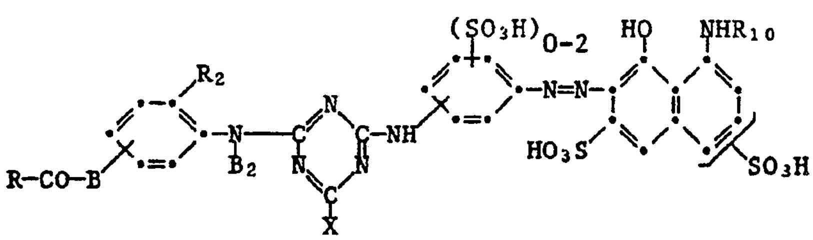

(12),

worin $R_{10}$ $C_{1-4}$-Alkanoyl oder Benzoyl ist ; und $B_2$, X, B, R und $R_2$ die unter Formel (2) angegebenen Bedeutungen haben.

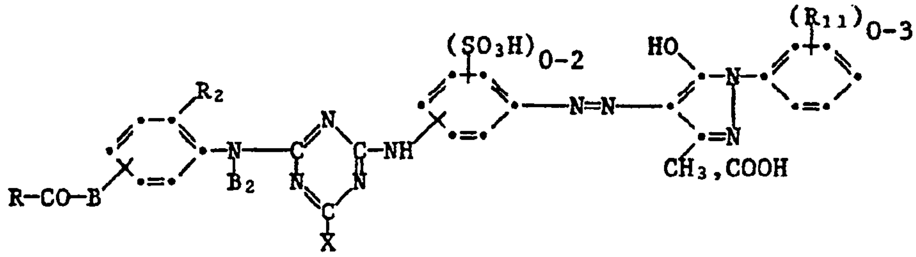

(13),

worin $R_{11}$ für 0 bis 3 Substituenten aus der Gruppe $C_{1-4}$-Alkyl, $C_{1-4}$-Alkoxy, Halogen, Carboxy und Sulfo steht; und $B_2$, X, B, R, und $R_2$ die unter Formel (2) angegebenen Bedeutungen haben.

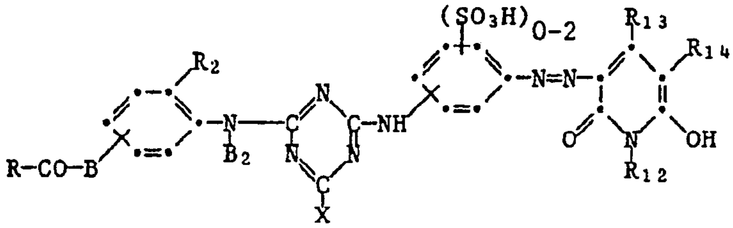

(14),

worin $R_{12}$ und $R_{13}$ unabhängig voneinander Wasserstoff, $C_{1-4}$-Alkyl oder Phenyl, und $R_{14}$ Wasserstoff, Cyano, Carbamoyl oder Sulfomethyl ist; und $B_2$, X, B, R und $R_2$ die unter Formel (2) angegebenen Bedeutungen haben.

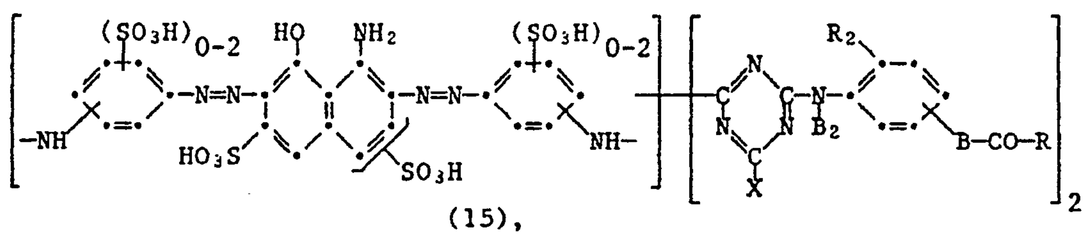

(15),

worin $B_2$, X, B, R und $R_2$ die unter Formel (2) angegebenen Bedeutungen haben.

Bevorzugt sind ausserdem Schwermetallkomplexe von Reaktivfarbstoffen der Formel (1); als komplexbildende Schwermetalle kommen vor allem Kupfer, Nickel, Kobalt oder Chrom in Betracht.

Bevorzugt sind insbesondere Reaktivfarbstoffe der Formeln (1) bis (15), worin Z die β-Sulfatoäthyl-, β-Chloräthyl- oder Vinylgruppe ist; oder worin X Fluor oder Chlor ist. In Betracht zu ziehen sind insbesondere auch Kombinationen von Merkmalen gemäss der vorhergehenden Beschreibung, sofern anwendbar.

Man erhält die Reaktivfarbstoffe der Formel (1), indem man einen organischen Farbstoff der Formel

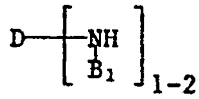

(16)

oder ein Farbstoffvorprodukt, mindestens ein Aequivalent eines s-Triazins der Formel

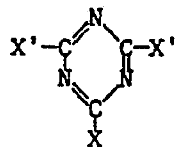

(17),

und mindestens ein Aequivalent eines Amins der Formel

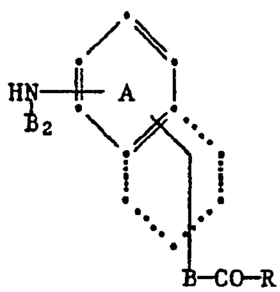

(18)

in beliebiger Folge zu einem Reaktivfarbstoff der Formel (1) umsetzt, wobei D, $B_1$, $B_2$, B, R und A die unter Formel (1) angegebenen Bedeutungen haben, und X und X' unabhängig voneinander eine der unter Formel (1) für X genannten Bedeutungen haben ; oder, im Falle der Verwendung von Farbstoffvorprodukten, die erhaltenen Zwischenprodukte in die gewünschten Endfarbstoffe überführt.

Das molare Verhältnis der Ausgangsstoffe muss der Zusammensetzung des Endprodukts entsprechend gewählt werden, je nachdem ob eine oder zwei Aminogruppen $-N(B_1)H$ in der Verbindung der Formel (16) vorhanden sind.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrenschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Ein wichtiges Verfahren ist dadurch gekennzeichnet, dass man einen Farbstoff der Formel

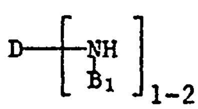

(16)

zunächst mit einem reaktionsfähigen Derivat des s-Triazins der Formel

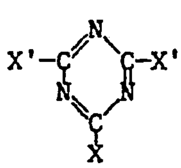

(17)

kondensiert, und die erhaltene Verbindung der Formel

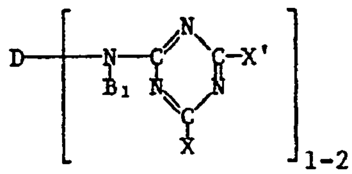

(19)

anschliessend mit einem Amin der Formel

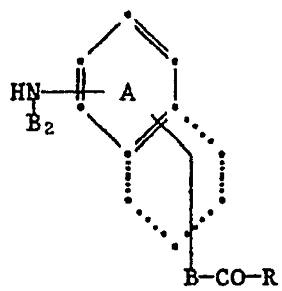

(18)

zu einem Reaktivfarbstoff der Formel (1) kondensiert.

Nach einem abgeänderten Verfahren können Reaktivfarbstoffe der Formel (1) hergestellt werden, indem man eine Komponente dieses Farbstoffes, die einen Rest der Formel

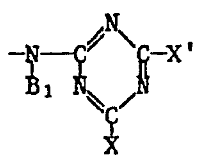

(20)

enthält, worin X und X' die für Formel (17) geltenden Bedeutungen haben, mit einer zur Herstellung des Farbstoffs benötigten zweiten Komponente, die gegebenenfalls einen Rest der Formel (20) enthält, umsetzt, und den so erhaltenen Farbstoff der Formel (19) mit einem Amin der Formel (18) kondensiert.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (18) dem Triazin der Formel (17) und dem organischen Farbstoff der Formel (16) oder einem Vorprodukt zweckmässigerweise zuerst ausgeführt wird, die des Triazins mit der Verbindung der Formel (18) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest $HO-CH_2CH_2-$ ist, herstellen und das Zwischenprodukt vor oder nach der Acylierung mit Schwefelsäure umsetzen, so dass die Hydroxygruppe in die Sulfatogruppe übergeführt wird ; oder man verwendet einen analogen Farbstoff, worin Z die Gruppe $H_2C=CH-$ ist, und lagert an das Zwischenprodukt Thioschwefelsäure an, wobei ein Rest $HO_3SS-CH_2CH_2-$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines

anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reahtivfarbstoffen der Formel (1), worin D der Rest eines aus zwei oder mehr als zwei Komponenten zusammengesetzten Farbstoffes ist, beispielsweise eines Monoazo-, Disazo-, Trisazo-, Metallkomplexazo-, Formazan- oder Azomethinfarbstoffes.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reaktivreste der Formel

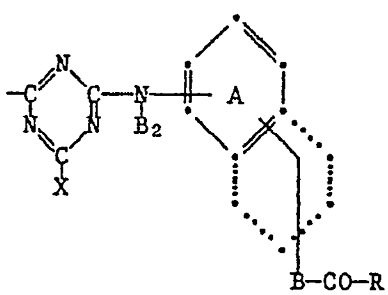

(21),

an die Diazo- und/oder Kupplungskomponenten gebunden. Falls in einem Reaktivfarbstoff der Formel (1) zwei Reste der Formel (21) enthalten sind, ist vorzugsweise je ein Rest der Formel (21) an eine Komponente, d.h. an eine Diazokomponente oder Kupplungskomponente, gebunden. Die Reaktivfarbstoffe haben somit z.B. die Formeln

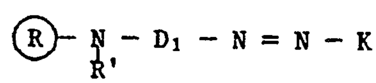

(22)

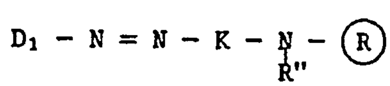

(23)

und

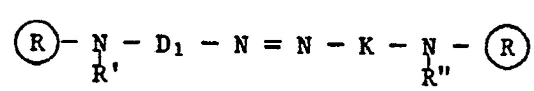

(24)

worin R′ und R″ unabhängig voneinander die gleiche Bedeutung haben wie $B_1$ in der Formel (1), $D_1$ der Rest einer Diazokomponente, und K der Rest einer Kupplungskomponente ist, und Ⓡ einen Reaktivrest der Formel (21) bedeutet.

Falls man von Farbstoffvorprodukten ausgeht, gelangt man zu den Reaktivfarbstoffen der Formel (1), indem man eine Komponente des Farbstoffes der Formel (16), die eine Gruppe $-N(B_1)H$ enthält, und ein Triazin der Formel (17) kondensiert, vorher oder nachher mit einer Verbindung der Formel (18) kondensiert, und mit der anderen Komponente des Farbstoffes der Formel (16) umsetzt. Bei der Herstellung der bevorzugten Azofarbstoffe müssen die Diazokomponenten und die Kupplungskomponenten zusammen mindestens eine Aminogruppe $-N(B_1)H$, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino-oder Nitroverbindungen, worin die Acetylamino- bzw. Nitrogruppe vor der Kondensation mit dem Triazin der Formel (17) durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho- ortho'-Stellung zur Azobrücke komplexbildende Gruppen, z.B. Hydroxy- oder Carboxygruppen, enthalten, vor oder gegebenenfalls auch nach der Kondensation mit dem Triazin der Formel (17) mit schwermetallabgebenden Mitteln behandelt. Von besonderem Interesse sind Kupferkomplexe von Reaktivfarbstoffen der Formel (1). Als methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

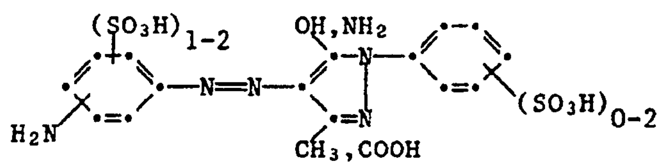

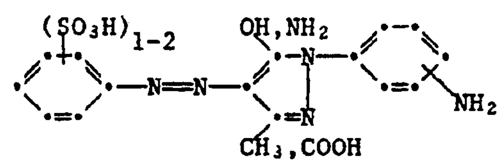

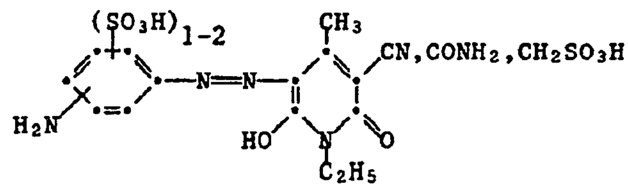

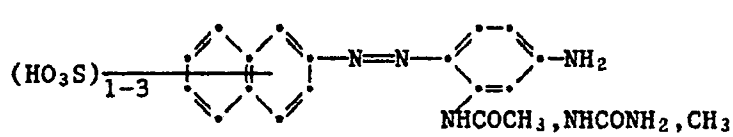

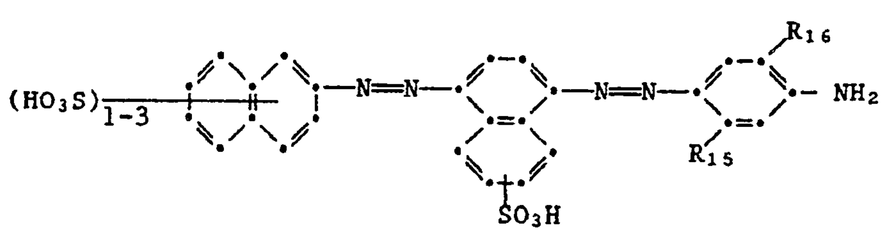

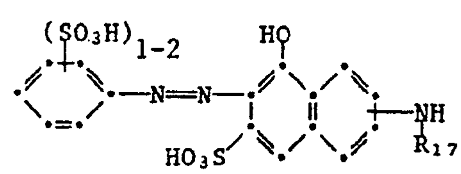

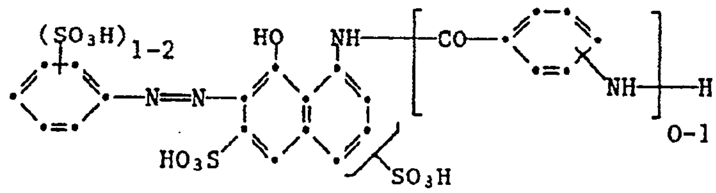

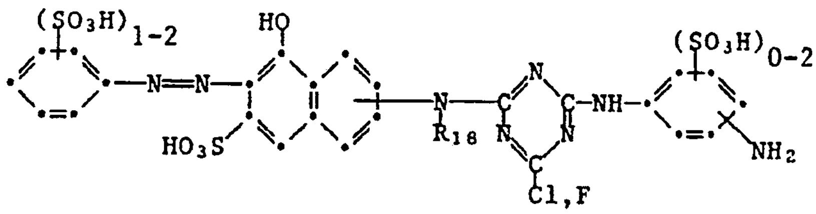

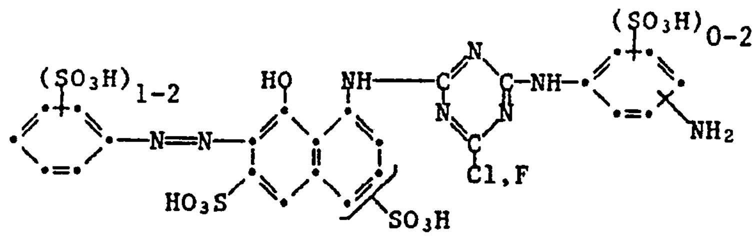

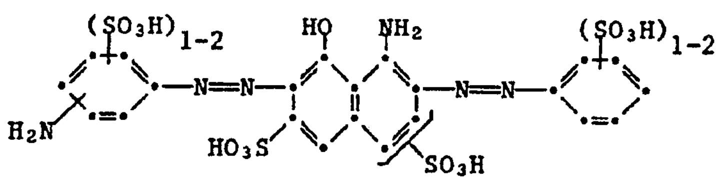

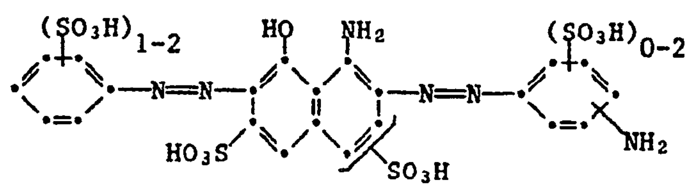

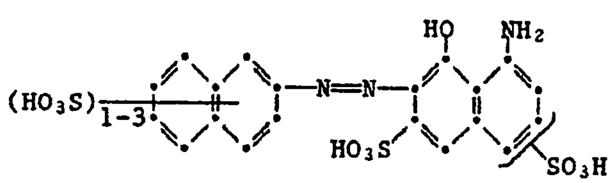

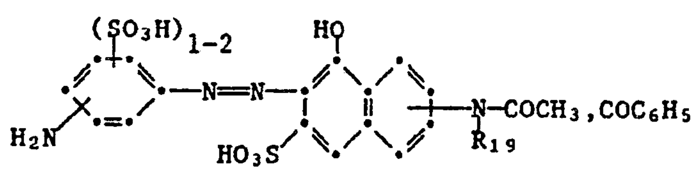

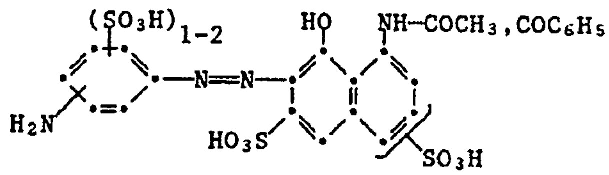

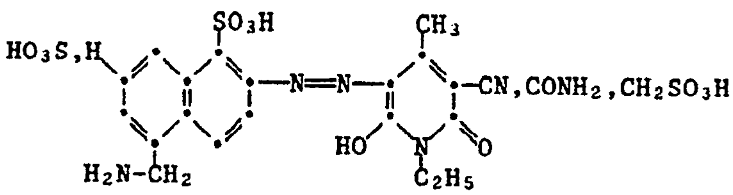

Metallkomplexe von Farbstoffen der Formeln :

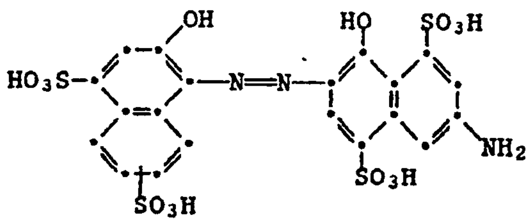

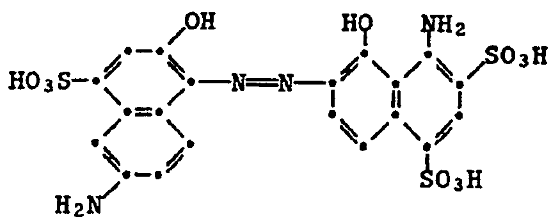

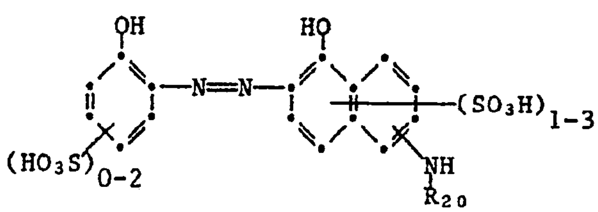

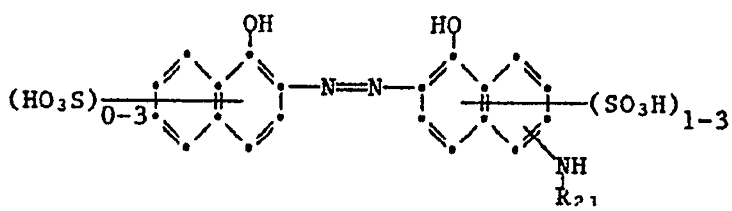

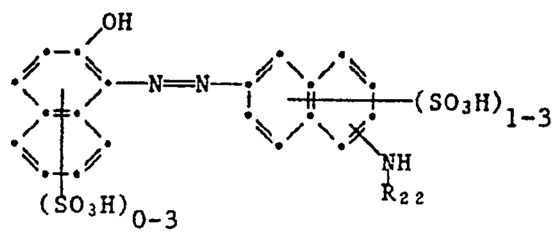

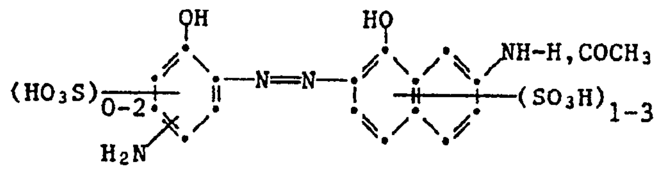

Als Metallatome sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut ein.

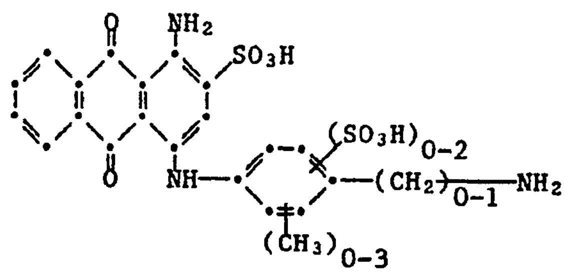

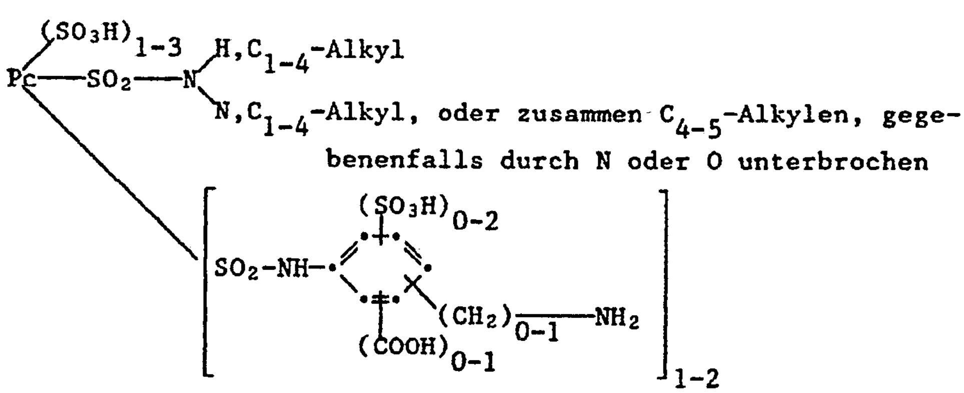

In dieser Formel steht Pc für den Cu- oder Ni-Phthalocyaninrest, die Gesamtzahl der Substituenten am Pc-Gerüst ist 4.

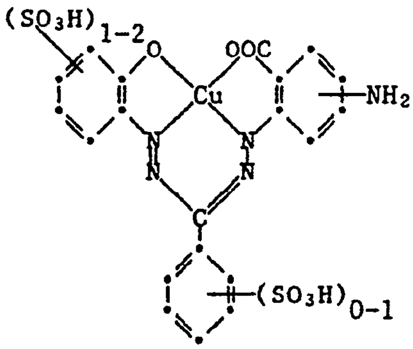

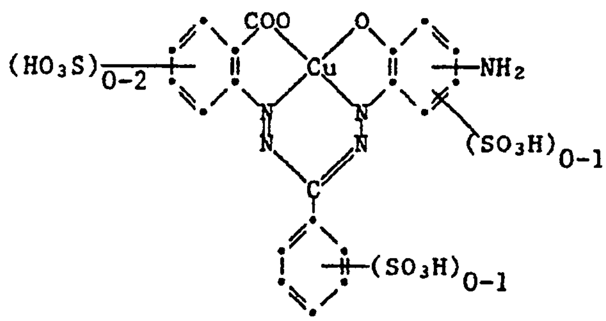

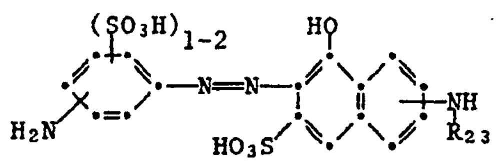

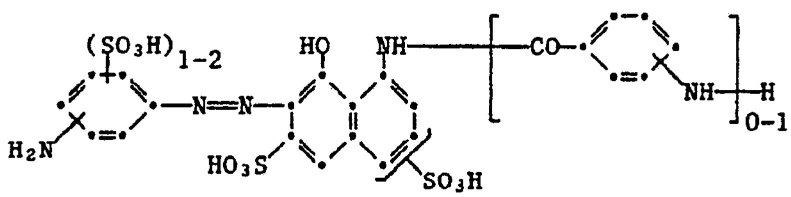

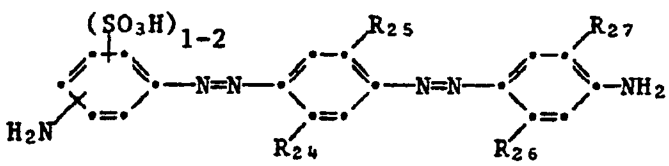

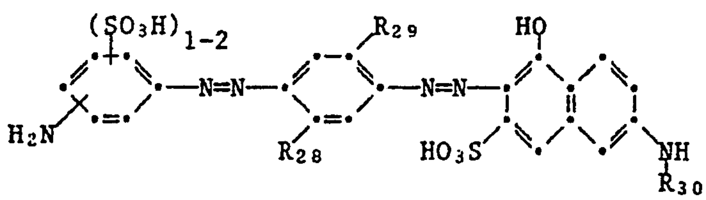

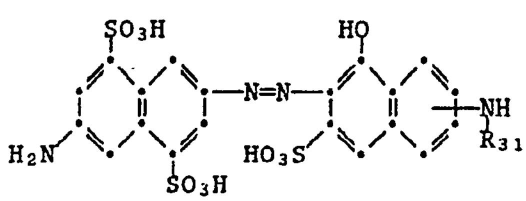

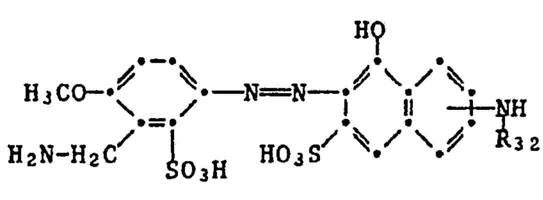

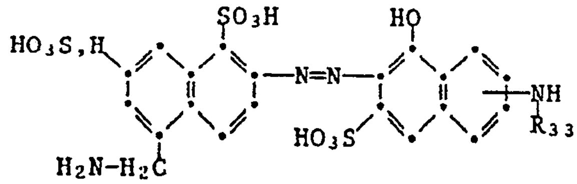

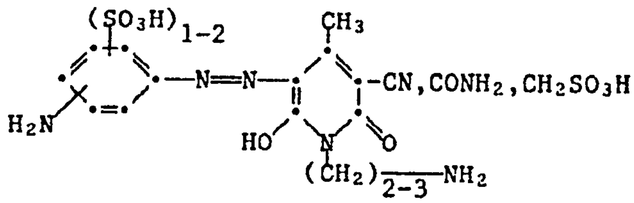

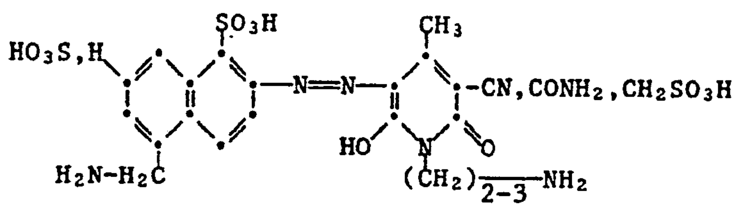

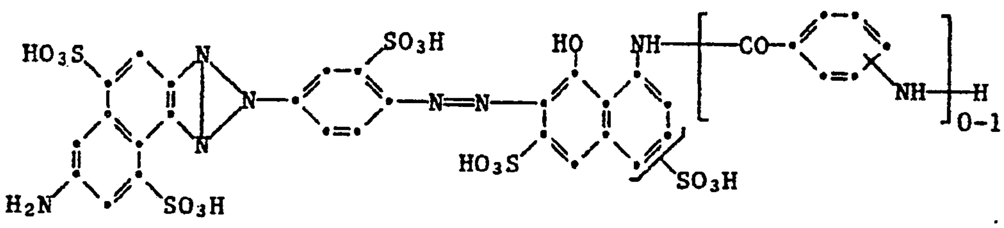

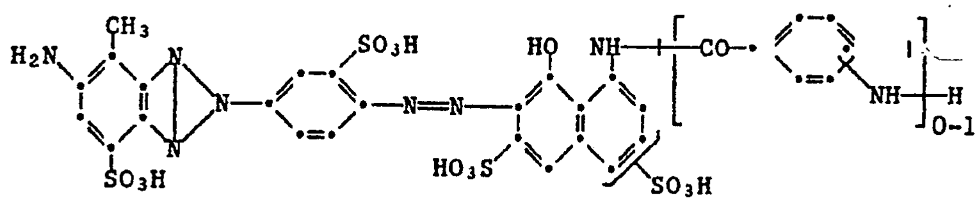

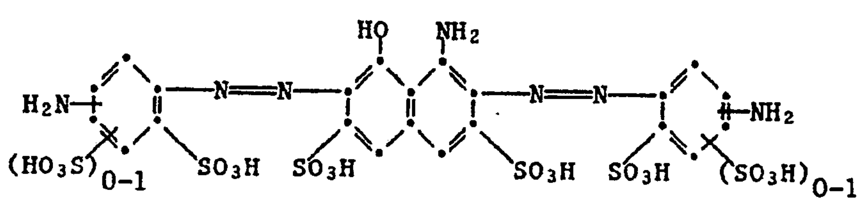

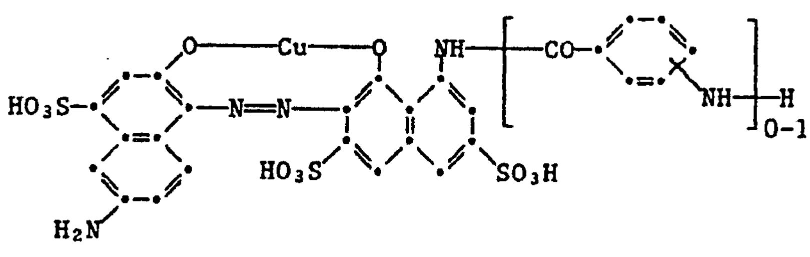

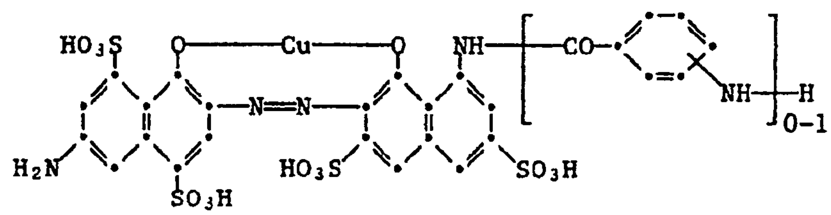

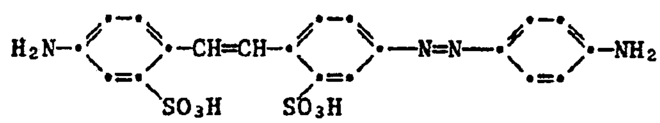

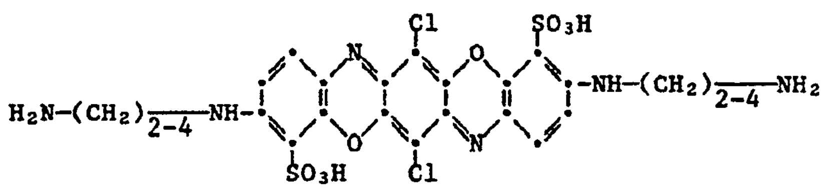

In den oben aufgeführten Formeln bedeuten die Reste $R_{17}$ bis $R_{23}$ und $R_{30}$ bis $R_{33}$ Wasserstoff oder $C_{1-4}$-Alkyl, und die Reste $R_{15}$, $R_{16}$ und $R_{24}$ bis $R_{29}$ Wasserstoff, $C_{1-4}$-Alkyl, $C_{1-4}$-Alkoxy, $C_{1-4}$-Alkanoylamino, Ureido oder Halogen, wobei die Reste $R_{15}$, $R_{16}$... etc., die zu ein und derselben Formel gehören, voneinander unabhängig sind. Vorzugsweise bedeuten die Reste $R_{17}$ bis $R_{23}$ und $R_{30}$ bis $R_{33}$ Wasserstoff, Methyl oder Aethyl, und die Reste $R_{15}$, $R_{16}$ und $R_{24}$ bis $R_{29}$ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor ; gleiches gilt für die Anthrachinone, Dioxazine usw. Vorzugsweise sind die Benzolringe nicht weitersubstituiert.

Als Diazo- und Kupplungskomponenten seien einzeln genannt :

Diazokomponenten :

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8-oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diamino-diphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridion-(2), 1-Ae-

thyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3′-Sulfophenylamino)-4,6-diamino-3-cyanpyridin, 2-(2′-Hydroxyäthylamino)-3-cyan-4-methyl-6-aminopyridin, 2,6-Bis-(2′-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfatoäthylamino-4-methoxybenzol, 1-Amino-3-sulfo-benzylamino-benzol, 1-Amino-3-sulfo-benzylamino-4-chlorbenzol, 1-Amino-3-N,N-di-sulfobenzylaminobenzol.

Triazine der Formel (17)

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Tris-phenylsulfonyl-s-triazin.

Amine der Formel (18)

Sie können hergestellt werden, indem man entsprechende Nitrophenyl- oder Nitrophenoxyalkansäurechloride oder analoge Naphthalinverbindungen mit Aminen der Formel

H-R (25),

welche den Resten der Formeln (1a) bis (1d) entsprechen, kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50°C und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Waserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischen Medium.

Die so erhältlichen Carbonsäureamide, in denen die Gruppierung $-SO_2$-Z eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2$-Z z.B. die Gruppierung $-SO_2-CH_2-CH_2-O-SO_3H$, $-SO_2-CH_2-CH_2-O-PO_3H_2$, $-SO_2-CH_2-CH_2$-Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen übergeführt werden, in denen die Gruppierung $-SO_2$-Z die Gruppierung $-SO_2-CH=CH_2$ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung $-SO_2$-Z die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel

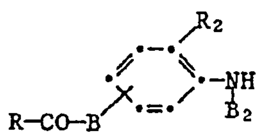 (26),

worin R ein Rest der Formel

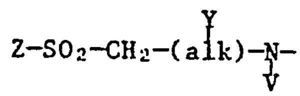 (1a)

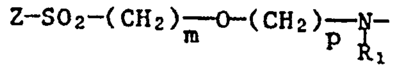 (1b)

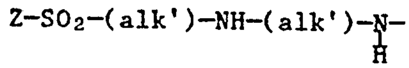 (1c)

oder 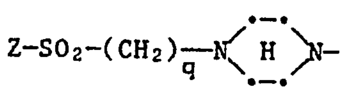 (1d)

ist ; $B_2$, b, Z, alk, Y, V, $R_1$, alk', m, p und q die unter Formel (1) angegebenen Bedeutungen haben ; und $R_2$ Wasserstoff, $C_1$-$C_4$-Alkyl, $C_1$-$C_4$-Alkoxy, Halogen, Hydroxy, Carboxy oder Sulfo ist. In den Verbindungen der Formel (26) ist vorzugsweise, $B_2$ Methyl, Aethyl, Isopropyl oder vor allem Wasserstoff ; $R_2$ Methyl, Methoxy, Chlor, Hydroxy, Carboxyl, Sulfo oder vor allem Wasserstoff ; B Methylen oder Methylenoxy ; und R einer der oben genannten Reste der Formeln (1a) bis (1d).

Das bevorzugte Verfahren zur Herstellung der Verbindungen der Formel (26) ist dadurch gekennzeichnet, dass man eine Verbindung der Formel

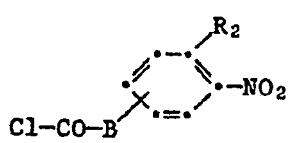 (27),

mit einem Amin der Formel

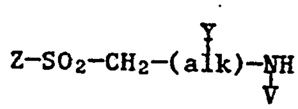 (28a)

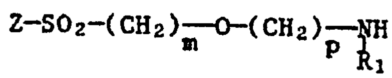 (28b)

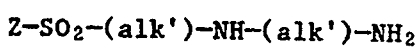 (28c)

oder 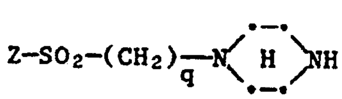 (28d)

kondensiert, und die Nitrogruppe zur Aminogruppe reduziert.

Nach einer Abänderung des oben beschriebenen Verfahrens können Verbindungen der Formel (26) auch in der Weise hergestellt werden, dass man eine Verbindung der Formel (27) mit einem Amin der Formel

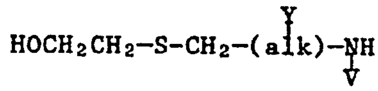 (29a)

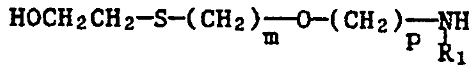 (29b)

$HOCH_2CH_2-S-(alk')-NH-(alk')-NH_2$ (29c)

oder 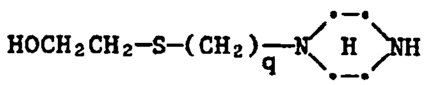 (29d)

kondensiert, das Kondensationsprodukt mit elementarem Chlor zu der entsprechenden β-Chloräthylsulfonyl-Verbindung oxydiert, und die Nitrogruppe zur Aminogruppe reduziert.

Ferner ist noch eine andere Verfahrensvariante anwendbar, wonach man zuerst eine Verbindung der Formel (27) mit einem der Amine der Formeln (29a) bis (29d) kondensiert. Das erhaltene Produkt mit einem Peroxid zum Sulfon oxydiert, dann die Nitrogruppe zur Aminogruppe reduziert, die erhaltene Aminoverbindung mit einem s-Triazin der Formel (17) oder einer Verbindung der Formel (19) kondensiert, und zuletzt die Hydroxygruppe in dem Rest von einem der Amine der Formeln (29a) bis (29d) sulfatiert.

Die Kondensation der Verbindung der Formel (27) mit den Aminen der Formeln (29a) bis (29d) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (28a) bis (29d) können analog dem Verfahren des Beispiels 1 der DE-OS 26 14 550 hergestellt werden.

Die Kondensation des s-Triazins der Formel (17), insbesondere eines 2,4,6-Trihalogen-s-triazins mit den organischen Farbstoffen der Formel (16) bzw. den eine Gruppe $-N(B_1)H$ enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (18) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (18) kann vor oder nach der Kondensation des Halogentriazins mit einem Farbstoff der Formel (16) geschehen. Die Kondensation des Halogentriazins mit einer Verbindung der Formel (18) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwichenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe

nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben werden.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

In der EP-A-0 074 928 werden Farbstoffe offenbart, die sich in charakteristischer Weise von den erfindungsgemässen Farbstoffen durch das Fehlen des Ringsystems A und der Gruppe B-CO– unterscheiden.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1 :

Eine Lösung von 48,3 Teilen 1-(4′-Sulfophenyl)-3-carboxy-4-(4′-amino-2′-sulfophenylazo)-pyrazolon-5 in 750 Teilen Eiswasser wird bei 0 bis 2°C und pH 5 mit 14 Teilen Cyanurfluorid umgesetzt. Sobald keine freien Aminogruppen mehr nachweisbar sind, werden 37 Teilen 1-Amino-4-β-(β′-chloräthylsulfonyl)-äthylaminocarbonylmethoxybenzol-hydrochlorid zugegeben und bei 0 bis 20°C und pH 5 bis 7 umgesetzt. Der nach Fällung mit Kaliumchlorid und schonender Trocknung erhaltene Farbstoff färbt Baumwolle in echten goldgelben Tönen. Er entspricht der Formel

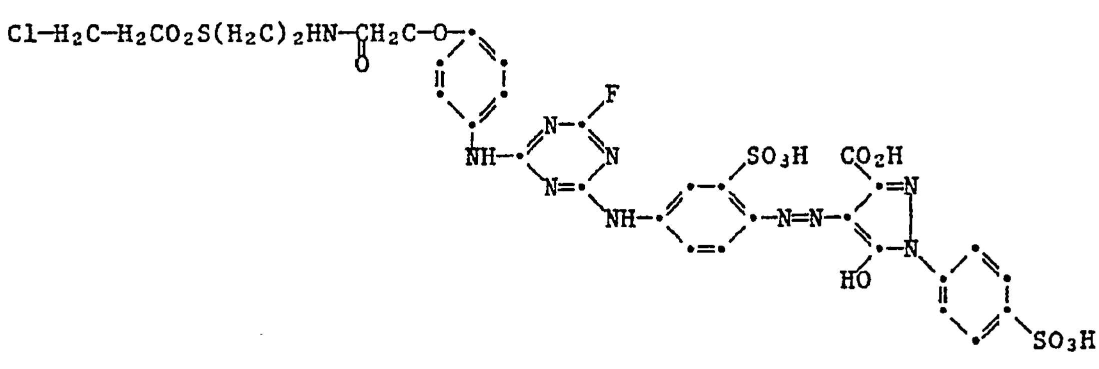

Beipiel 2 :

Das Kondensationsprodukt aus 18,8 Teilen 1,3-Phenylendiamin-4-sulfonsäure und 19 Teilen Cyanurchlorid wird salzsauer diazotiert, mit 28,5 Teilen 1-(4′-Sulfophenyl)-3-carboxy-pyrazolon-5 versetzt und bei pH 5

bis 7 gekuppelt. Nach Zugabe einer Lösung von 45 Teilen 1-Amino-4-β-(β'-chloräthylsulfonyl)-äthylaminocarbonylmethoxybenzol-3-sulfonsäure-hydrochlorid wird die Temperatur auf 40°C erhöht und ein pH-Wert von 7,5 eingestellt. Nach beendeter Kondensation wird der Farbstoff mit Kaliumchlorid aus neutraler Lösung abgeschieden und schonend getrocknet. Er färbt Baumwolle in echten gelben Tönen und entspricht der Formel

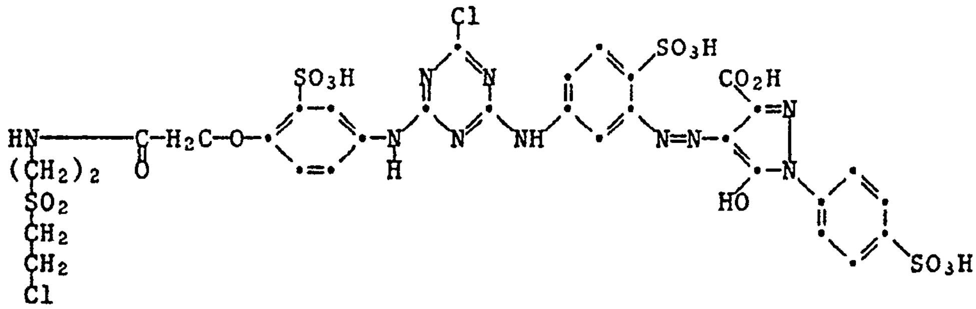

Beipiel 3 :

Das Kondensationsprodukt aus 18,8 Teilen 1,3-Phenylendiamin-4-sulfonsäure und 19 Teilen Cyanurchlorid wird salzsauer diazotiert, mit 28,5 Teilen 1-(4'-Sulfophenyl)-3-carboxy-pyrazolon-5 versetzt und bei pH 5 bis 7 gekuppelt. Nach Zugabe einer Lösung von 34 Teilen 1-Amino-4-β-(β'-chloräthylsulfonyl)-äthylaminocarbonylmethylbenzol-hydrochlorid wird die Temperatur auf 40°C erhöht und ein pH-Wert von 7,5 eingestellt. Nach beendeter Kondensation wird der Farbstoff mit Kaliumchlorid aus neutraler Lösung abgeschieden und schonend getrocknet. Er färbt Baumwolle in echten gelben Tönen und entspricht der Formel

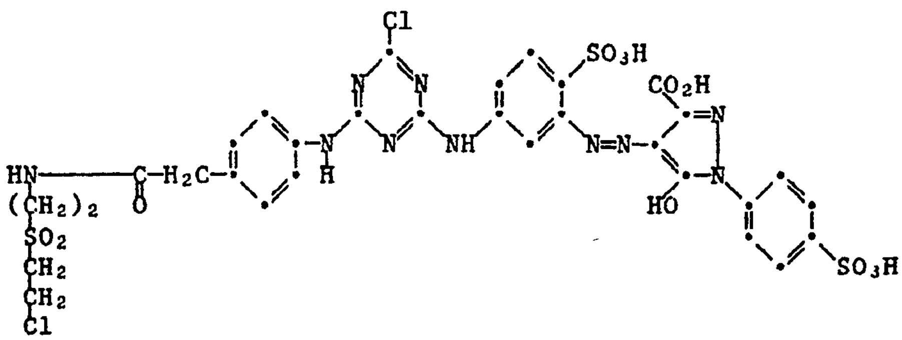

Beispiel 4 :

30,3 Teile 2-Aminonaphthalin-4,8-disulfonsäure werden salzsauer diazotiert und auf 15 Teile 3-Acetylaminoanilin gekuppelt. Nach Acylierung mit 19 Teilen fein dispergierten Cyanurchlorids wird bei 20°C, pH 6 bis 7, mit 37 Teilen 1-Amino-3-β-(β'-chloräthylsulfonyl)-äthylaminocarbonylmethoxybenzol-hydrochlorid umgesetzt und mit Kaliumchlorid ausgesalzen. Der nach schonender Trocknung erhaltene Farbstoff färbt Baumwolle in echten rotstichtig gelben Tönen an und entspricht der Formel

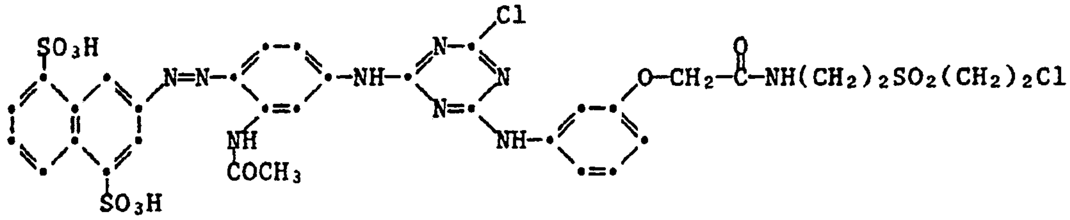

Beispiel 5 :

30,3 Teile 2-Aminonaphthalin-4,8-disulfonsäure werden salzsauer diazotiert und auf 15 Teile 3-Acetylaminoanilin gekuppelt. Nach Acylierung mit 14 Teilen Cyanurfluorid bei 0 bis 2°C, pH 6-7, wird bei 20°C, pH 6 bis 7, mit 45 Teilen 1-Amino-4-β-(β'-chloräthylsulfonyl)-äthylaminocarbonylmethoxybenzol-3-sulfonsäure-hydrochlorid umgesetzt, und bei pH-Wert 10,0 bei Raumtemperatur 15 Minuten vinyliert und anschliessend der pH-Wert auf 7,0 zurückgestellt und mit Kaliumchlorid ausgesalzen. Der nach schonender Trocknung erhaltene Farbstoff färbt Baumwolle in echten rotstichigen gelben Tönen an und entspricht der Formel

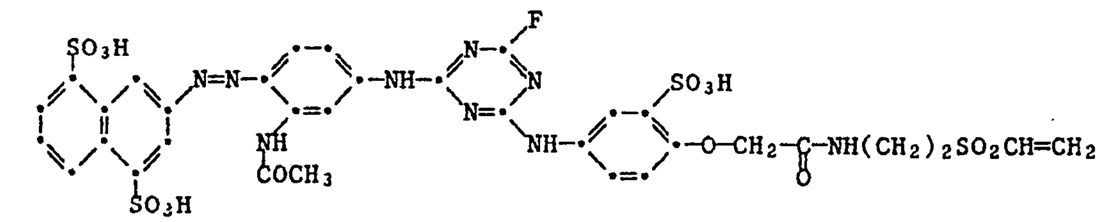

Beispiel 6 :

50,3 Teile des Farbstoffs 2-Amino-5-hydroxy-6-(2,5-disulfonylbenzolazo)-naphthalin-7-sulfonsäure werden in 800 ml Wasser neutral gelöst und die Lösung auf 0 bis 5°C abgekühlt. Bei dieser Temperatur werden 14,2 Teile Cyanurfluorid innert 20 Minuten zugetropft, wobei der pH der Reaktionslösung bei 6 bis 6,5 gehalten wird. Nach Zusatz von 34 Teilen 1-Amino-4-β-(β'-chloräthylsulfonyl)-äthylaminocarbonylmethylbenzol-hydrochlorid in 100 ml Wasser wird die Temperatur auf 20 bis 25°C erhöht und der pH bei 5,5 bis 6,5 gehalten. Reaktionsdauer ca. 2 Std.

Zur Abscheidung des Farbstoffes wird die neutrale Lösung mit 10% Natriumchlorid und 10% Kaliumchlorid versetzt und filtriert. Die erhaltene Paste wird im Vakuum bei 40 bis 50°C getrocknet. Der so hergestellte Reaktivfarbstoff hat die folgende Konstitution :

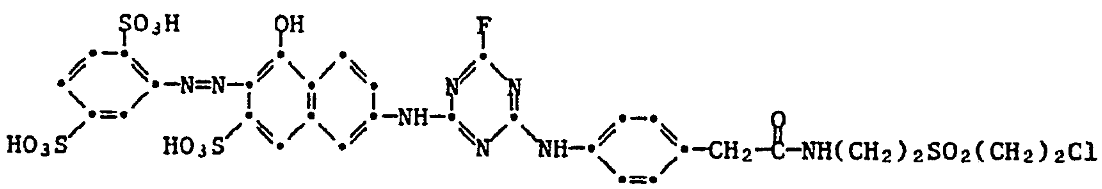

Beispiel 7 :

50, 3 Teile des Farbstoffs 2-Amino-5-hydroxy-6-(2,5-disulfonylbenzolazo)-naphthalin-7-sulfonsäure werden in 800 ml Wasser neutral gelöst und die Lösung auf 0 bis 5°C abgekühlt. Bei dieser Temperatur werden 18,4 Teile Cyanurchlorid innert 20 Minuten zugetropft, wobei der pH der Reaktionslösung durch gleichzeitige Zugabe von 2n Natriumhydroxidlösung bei 6 bis 6,5 gehalten wird. Nach Zusatz von 37 Teilen 1-Amino-4-β-(β'-chloräthylsulfonyl)-äthylaminocarbonylmethoxybenzol-hydrochlorid in 100 ml Wasser wird die Temperatur auf 20 bis 25°C erhöht und der pH bei 5,5 bis 6,5 gehalten. Reaktionsdauer ca. 2 Std.

Zur Abscheidung des Farbstoffes wird die neutrale Lösung mit 10% Natriumchlorid und 10% Kaliumchlorid versetzt und filtriert. Die erhaltene Paste wird im Vakuum bei 40 bis 50°C getrocknet. Der so hergestellte Reaktivfarbstoff hat die folgende Konstitution :

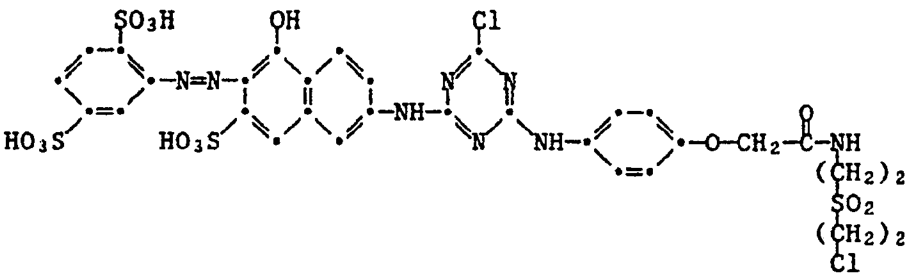

Der zur Herstellung des erfindungsgemässen Farbstoffs benötigte Ausgangsfarbstoff 2-Amino-5-hydroxy-6-(2',5'-disulfophenylazo)-naphthalin-7-sulfonsäure kann wie folgt erhalten werden :

50,6 Teile 2-Amino-benzol-1,4-disulfonsäure werden in 120 Teilen Wasser neutral gelöst und wie üblich diazotiert. Hierauf lässt man die Diazoverbindung bei 0 bis 5°C zu einer Mischung von 56,2 Teilen 2-Acetamino-5-naphthol-7-sulfonsäure, welche in 300 Teilen Wasser neutral gelöst wurden, 25 Teilen Natriumhydrogencarbonat und 150 Teilen Eis hinzulaufen. Der pH-Wert beträgt zunächst 6,5 und steigt nach längerem Rühren auf 7,5 bis 7,8. Nach Beendigung der Kupplung gibt man 60 Teile 10-normale Natronlauge hinzu und erwärmt zur Verseifung der Acetaminogruppe 2 Stunden auf 90°C. Die alkalische Lösung des orangen Zwischenfarbstoffes wird mit etwa 22 Teilen 10-normaler Salzsäure neutral gestellt, mit 20% Natriumchlorid und 15% Kaliumchlorid versetzt, einige Zeit gerührt und filtriert.

Beispiel 8 :

47 Teile der bekannten Aminodisazoverbindung der Formel

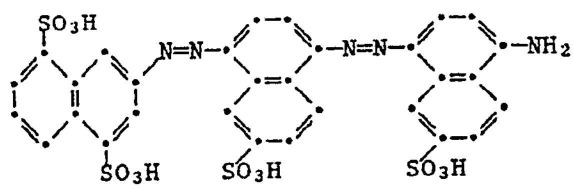

werden in 300 Volumenteilen Wasser bei pH 6,5 gelöst und bei 0 bis 5°C mit 10 Teilen Cyanurchlorid umgesetzt. Das entstandene Produkt wird anschliessend mit 18 Teilen 1-Amino-4-β-(β'-chloräthylsulfonyl)-äthylaminocarbonylmethoxybenzol-hydrochlorid bei pH 6 bis 7 und 20 bis 25°C zur Reaktion gebracht. Nach der Fällung mit 80 Teilen Kaliumchlorid erhält man den Farbstoff der Formel

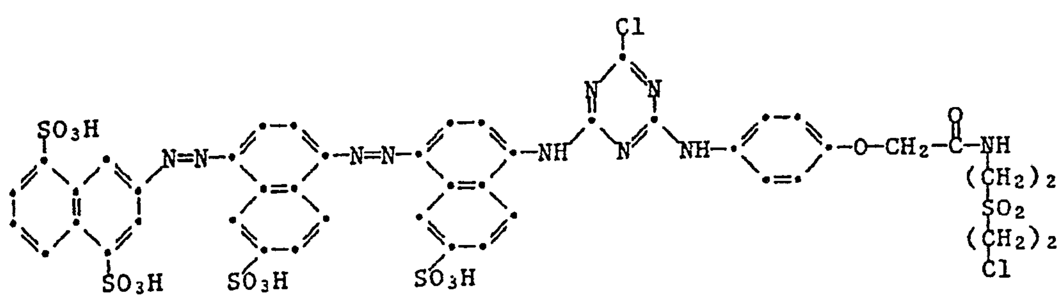

der Baumwolle in echten rötlich-braunen Tönen färbt

Beispiel 9 :

95 Teile Cyanurchlorid werden in bekannter Weise mit 1-Amino-8-hydroxynaphthalin-3,6-disulfonsäure in Wasser umgesetzt. Zu diesem Produkt wird eine frisch diazotierte Lösung von 1-Aminobenzol-2-sulfonsäure gegeben und der pH-Wert auf 4 bis 4,5 eingestellt. Nach beendeter Kupplung wird 1 Teil 1-Amino-4-β-(β'-chloräthylsulfonyl)-äthylaminocarbonylmethylbenzol-hydrochlorid zugegeben und bei pH 7 bis 7,5 und 35°C zur Reaktion gebracht. Nach Aussalzen mit KCl erhält man 420 Teile des Farbstoffs der Formel

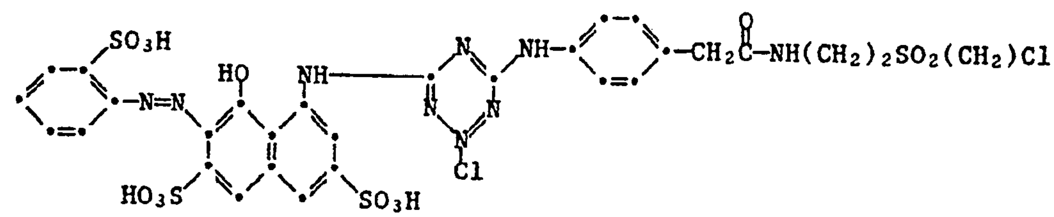

der Baumwolle in leuchtend roten, echten Tönen färbt.

Beispiel 10 :

16 Teile 1-Amino-8-hydroxynaphthalin-3,6-disulfonsäure werden in 400 Teilen Wasser neutral gelöst. Man stellt die Reaktionslösung auf einen pH-Wert von 4,5 und tropft bei 0 bis 3°C unter gutem Rühren 7,0 Teile Cyanurfluorid zu. Der dabei freiwerdende Fluorwasserstoff wird durch dosierte Zugabe von 2n Natriumhydroxydlösung neutralisiert. Sobald keine freie 1-Amino-8-hydroxynaphthalin-3,6-disulfonsäure mehr nachweisbar ist, werden 18 Teile 1-Amino-4-β-(β'-chloräthylsulfonyl)-äthylaminocarbonylmethoxybenzol-hydrochlorid in 50 Teilen Wasser zugegeben. Man lässt die Temperatur auf 20 bis 25°C steigen und hält den pH-Wert der Reaktionslösung bei 4 bis 4,5. Nach beendigter Kondensation wird das Farbstoffzwischenprodukt bei 0 bis 10°C mit 15 Teilen diazotierter 2-Aminonaphthalin-1,5-disulfonsäure gekuppelt. Bei einem End-pH von 6,5 bis 7 wird der Farbstoff der Formel

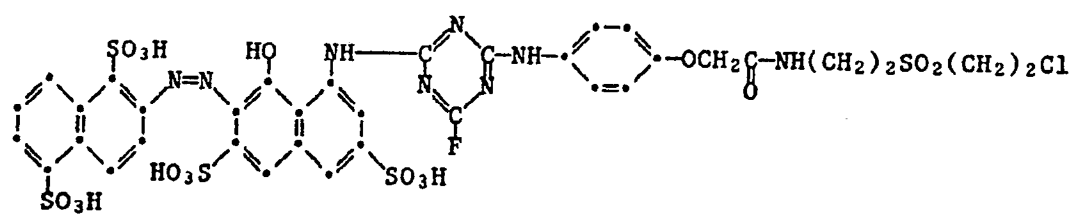

mit Natriumchlorid ausgesalzen, filtriert, gewaschen und im Vakuum getrocknet. Er stellt ein dunkelrotes Pulver dar und färbt Baumwolle und regenerierte Cellulose in blaustichtigen Rottönen von guter Nass-, Reib- und Lichtechtheit.

Beispiel 11 :

16 Teile 1-Amino-8-hydroxynaphthalin-4,6-disulfonsäure werden in 400 Teilen Wasser neutral gelöst. Man stellt die Reaktionslösung auf einen pH-Wert von 4,5 und tropft bei 0 bis 3°C unter gutem Rühren 7,0 Tiele Cyanurfluorid zu. Der dabei freiwerdende Fluorwasserstoff wird durch dosierte Zugabe von 2n Natriumhydroxydlösung neutralisiert. Sobald keine freie 1-Amino-8-hydroxynaphthalin-3,6-disulfonsäure mehr nachweisbar ist, werden 23 Teile 1-Amino-4-β-(β'-chloräthylsulfonyl)-äthylaminocarbonylmethoxybenzol-hydrochlorid in 50 Teilen Wasser zugegeben. Man lässt die Temperatur auf 20 bis 25°C steigen und hält den pH-Wert der Reaktionslösung bei 4 bis 6,5. Nach beendigter Kondensation wird das Farbstoffzwischenprodukt bei 0 bis 10°C mit 11 Teilen diazotierter 2-Aminobenzolsulfonsäure gekuppelt. Bei einem End-pH von 6,5 bis 7 wird der Farbstoff der Formel

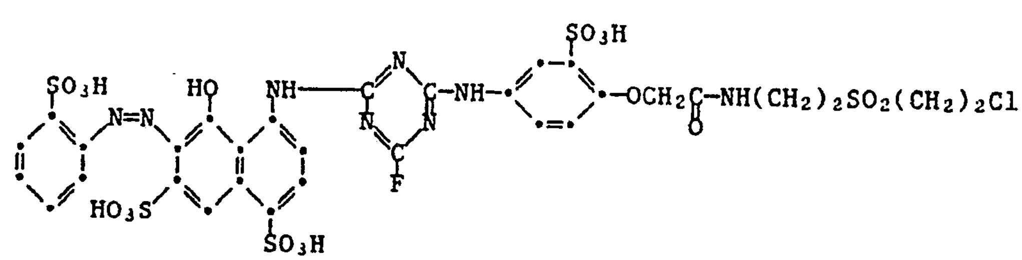

mit Natriumchlorid ausgesalzen, filtriert, gewaschen und im Vakuum getrocknet. Er stellt ein dunkelrotes Pulver dar und färbt Baumwolle und regenerierte Cellulose in gelbstichigen Rottönen von guter Nass-, Reib- und Lichtechtheit.

Beispiel 12 :

3-Amino-acetanilid-4-sulfonsäure wird auf übliche Weise diazotiert und auf 1-Benzoylamino-8-hydroxy-naphthalin-3,6-disulfonsäure gekuppelt, anschliessend die Acetylgruppe alkalisch selektiv hydrolysiert. Das Chromophor wird nun wie in Beispiel 1 beschrieben mit 2,4,6-Trifluor-1,3,5-triazin umgesetzt. Nach Austausch eines Fluors gegen den Rest des 1-Amino-4-β-(β'-chloräthylsulfonyl)-äthylaminocarbonylmethoxybenzol-hydrochlorids erhält man einen Farbstoff der Formel

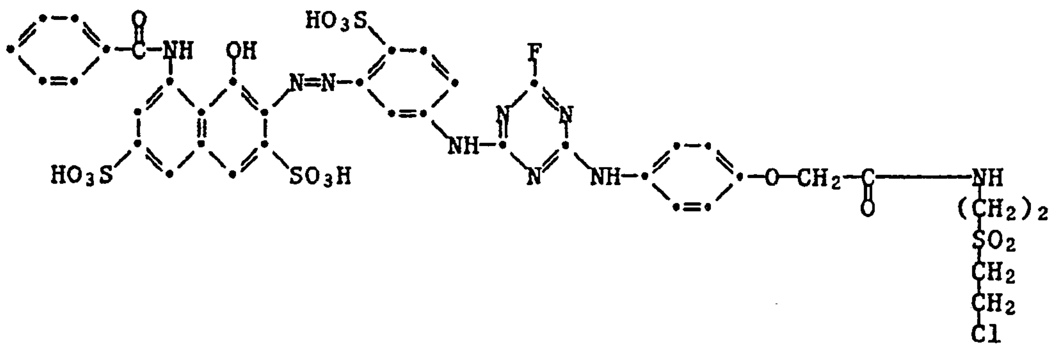

der Baumwolle in brillanten echten Rottönen färbt.

Beispiel 13 :

64,8 Teile des bekannten Farbstoffs der Formel

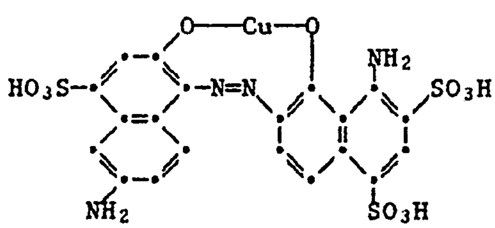

werden in 700 Teilen Wasser angerührt mit 19 Teilen Cyanurchlorid bei 0 bis 5°C/pH 2 bis 3 umgesetzt und schliesslich mit 34 Teilen 1-Amino-4-β-(β'-chloräthylsulfonyl)-äthylaminocarbonylmethylbenzol-hydrochlorid bei pH 6 bis 7/20°C zur Reaktion gebracht. Der Farbstoff wird durch Sprühtrocknung der Lösung gewonnen. Man erhält 90 Teile des Farbstoffs der Formel

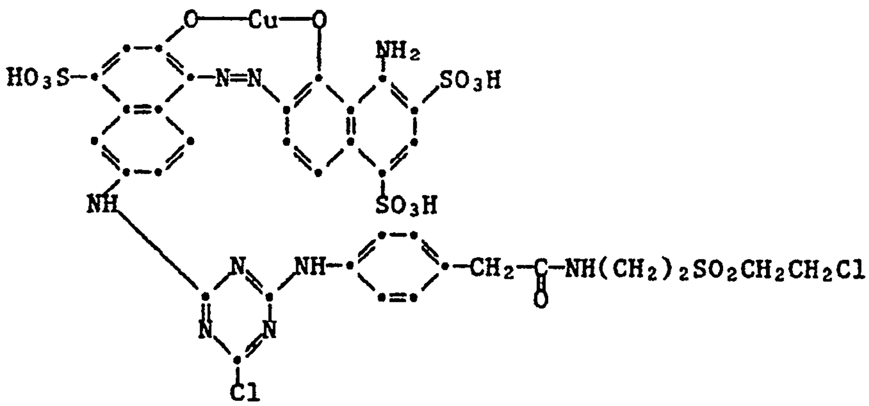

Beispiel 14 :

26 Teile des bekannten Farbstoffs der Formel

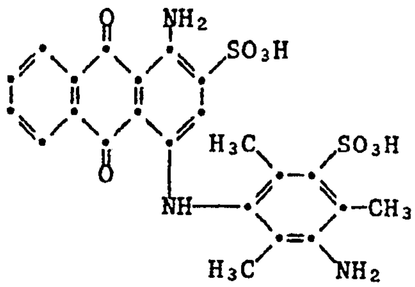

werden bei 0 bis 5°C und pH 2 bis 3 in Wasser mit 10 Teilen Cyanurchlorid umgesetzt und anschliessend mit 24 g 1-Amino-4-β-(β'-chloräthylsulfonyl)-äthylaminocarbonylmethoxybenzol-hydrochlorid zur Reaktion gebracht (Temperatur 20 bis 25°C ; pH 6,0 bis 7,0). Der gebildete Farbstoff der Formel

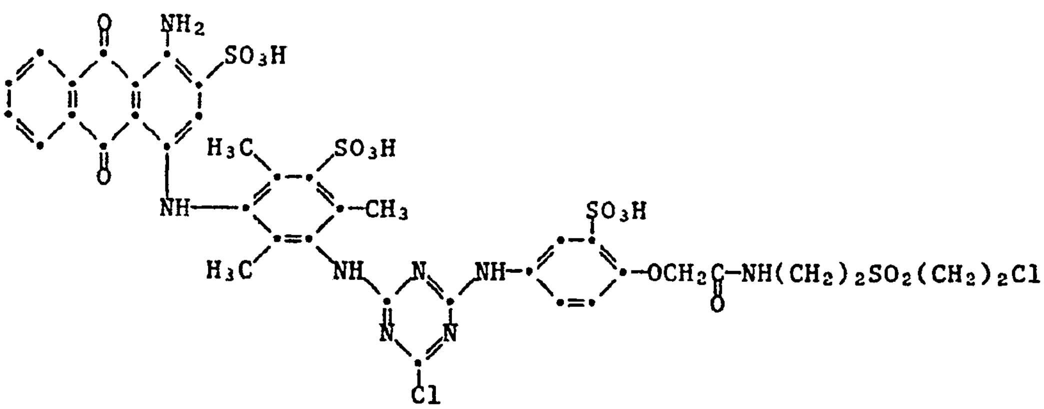

lässt sich durch Aussalzen mit Kaliumchlorid gewinnen und färbt Baumwolle vor allem im Druckverfahren in leuchtend blauen, sehr lichtechten Tönen.

Beispiel 15 :

Zu 17,3 Teilen salzsauer diazotierter Anilin-4-sulfonsäure werden bei 5°C 31,6 Teile einer Suspension von 1-Amino-8-hydroxy-naphthalin-3,6-disulfonsäure in 300 Teilen Wasser gegeben. Man kuppelt über Nacht bei pH 1 bis 2 und fügt anschliessend 38,6 Teile einer Suspension von salzsauer diazotiertem primärem Kondensationsprodukt aus Cyanurchlorid und 1,3-Phenylendiamin-4-sulfonsäure zu. Durch Zugabe von 17,8 Teilen Natriumcarbonat wird schwach sauer ausgekuppelt ; anschliessend wird eine Lösung von 36 Teilen 1-Amino-

4-β-(β'-chloräthylsulfonyl)-äthylaminocarbonylmethoxybenzol-hydrochlorid zugefügt und bei 20 bis 30°C und einem pH-Wert von 7 bis 7,5 kondensiert. Aus neutraler Lösung wird der Farbstoff durch Zugabe von Kaliumchlorid gefällt und schonend getrocknet. Man erhält ein schwarzes Pulver, das Baumwolle in echten marineblauen Tönen färbt.

Der Farbstoff entspricht der Formel

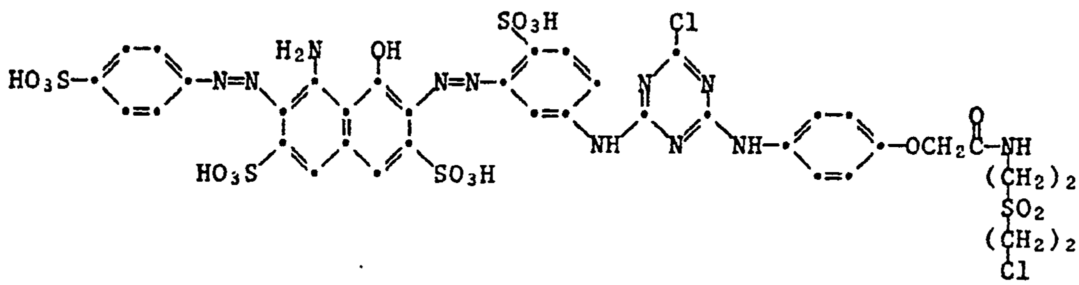

Beispiel 16 :

Zu 21,6 Teilen salzsauer diazotierter 3-Amino-acetanilid-4-sulfonsäure werden bei 5°C 31,6 Teile einer Suspension von 1-Amino-8-hydroxynaphthalin-3,6-disulfonsäure in 300 Teilen Wasser gegeben. Man kuppelt über Nacht bei pH 1 bis 2 und fügt anschliessend 17,3 Teile einer Suspension von salzsauer diazotierter Anilin-4-sulfonsäure zu. Durch Zugabe von 17,8 Teilen Natriumcarbonat wird schwach sauer ausgekuppelt; anschliessend alkalisch 2 Std. lang bei 80°C hydrolysiert. Das Chromophor wird isoliert und bei 0 bis 2°C/pH 6 bis 7, mit 14 Teilen Cyanurfluorid kondensiert. Danach gibt man 36 Teile 1-Amino-4-β-(β'-chloräthylsulfonyl)-äthylaminocarbonylmethoxybenzol-hydrochlorid zu und kondensiert bei 0 bis 20°C/pH 6 bis 7 2 Std. lang. Aus neutraler Lösung wird der Farbstoff durch Zugabe von Kaliumchlorid gefällt und schonend getrocknet. Man erhält ein schwarzes Pulver, das Baumwolle in echten marineblauen Tönen färbt.

Der Farbstoff entspricht der Formel

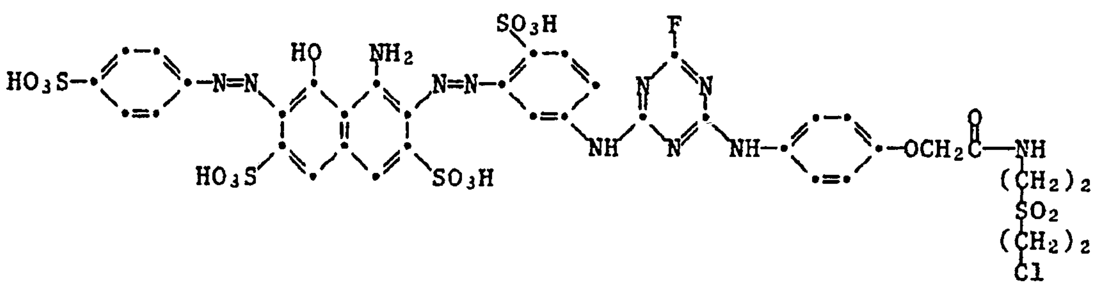

Beispiel 17 :

15,8 Teile der Verbindung der Formel

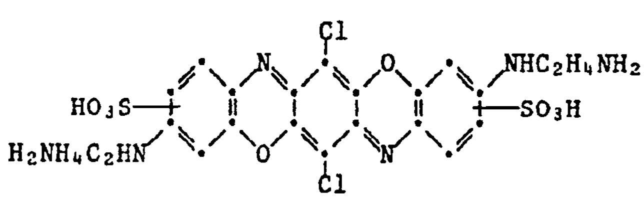

werden mit 1500 Teilen Wasser auf 45°C erwärmt, wobei mit Natronlauge pH 9 eingestellt wird. Dann kühlt man auf 0 bis 5°C ab und gibt, nachdem man den pH-Wert mit Salzsäure auf 7 herabgesetzt hat, eine feine Suspension von 9,7 Teilen Cyanurchlorid in 100 Teilen Eiswasser zu. Man rührt bei 0 bis 5°C und hält mit Soda den pH-Wert zwischen 6,5 und 7, bis die Umsetzung beendet ist, was etwa $1\frac{1}{2}$ Std. in Anspruch nimmt. Innerhalb von 10 Minuten lässt man nun eine neutrale Lösung von 24 Teilen 1-Amino-4-β-(β'-chloräthylsulfonyl)-äthyl-

aminocarbonylmethoxybenzol-3-sulfonsäure-hydrochlorid in 200 Teilen Wasser zutropfen. Man erhöht die Temperatur auf 20 bis 30°C und rührt unter Aufrechterhaltung von pH 6,5 bis 7, bis die Umsetzung beendet ist. Nun wird auf 20°C abgekühlt, mit 400 Teilen Kaliumchlorid ausgesalzen, der ausgefallene Farbstoff abgesaugt und getrocknet. Er färbt Cellulosefasern in rotstichig-blauen Tönen mit guten Echtheitseigenschaften an und entspricht der Formel

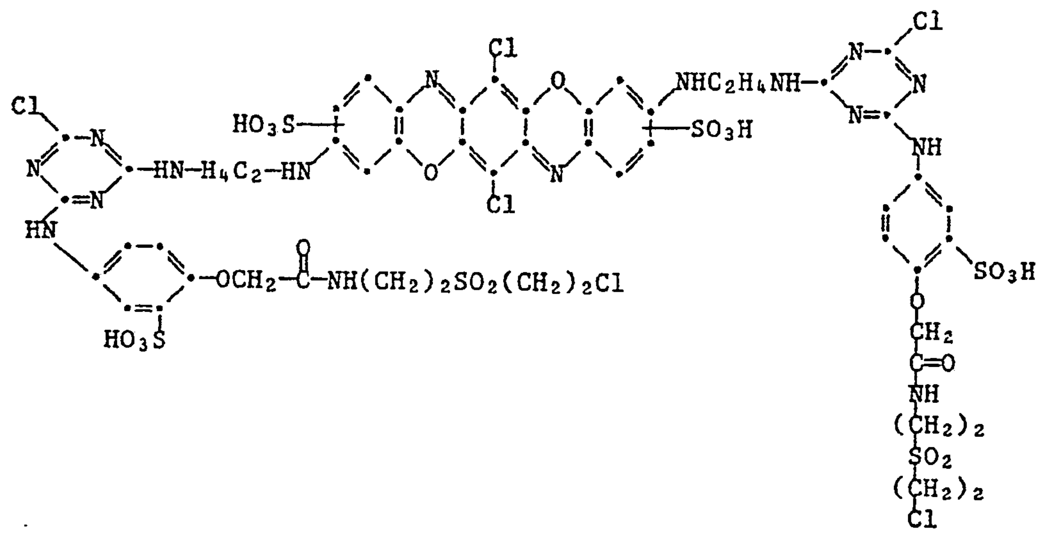

Beispiel 18 :

19,7 Teile der Verbindung der Formel

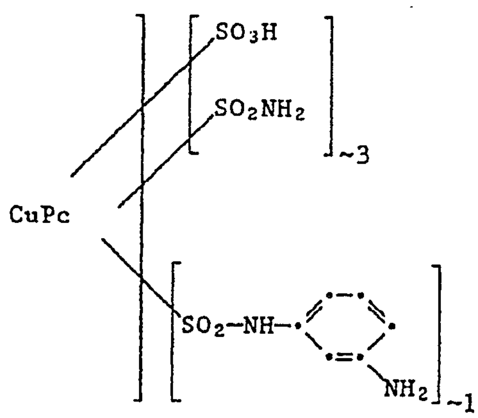

werden in einer Mischung aus 125 Teilen Eis und 125 Teilen Wasser homogen verrührt und mit Natronlauge auf pH 7 eingestellt. Bei einer Temperatur von 0 bis 2°C gibt man nun 4 Teile Cyanurfluorid zu, wobei der pH-Wert mit Soda bei 5,5 bis 6 gehalten wird. Sobald die Umsetzung vollständig ist, lässt man eine neutrale Lösung von 14 Teilen 1-Amino-4-β-(β'-chloräthylsulfonyl)-äthylaminocarbonylmethoxybenzol-3-sulfonsäure-hydrochlorid in 100 Teilen Wasser zutropfen. Man erhöht die Temperatur auf 0 bis 30°C und rührt unter Aufrechterhaltung von pH 6,5 bis 7, bis die Umsetzung vollständig ist. Dann wird auf Raumtemperatur abgekühlt, der Farbstoff mit Natriumchlorid ausgesalzen, abgesaugt und getrocknet. Er hat die ungefähre Formel

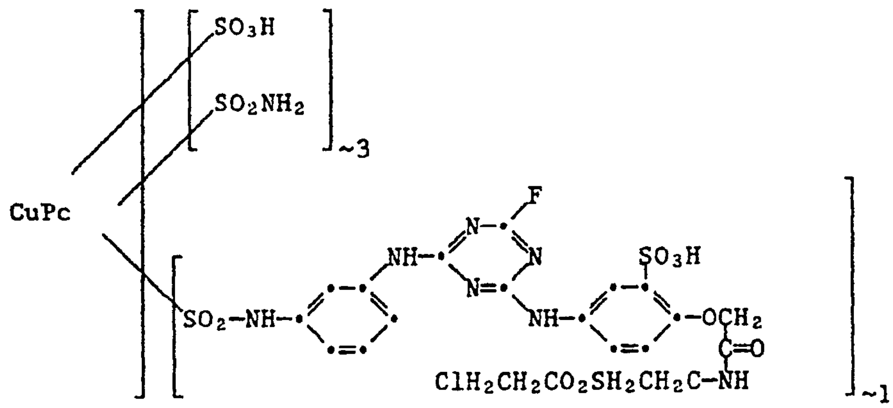

und färbt Cellulosematerial in türkisblauen Tönen von guten Echtheiten.

Beispiel 19 :

58 Teile der Verbindung der ungefähren Formel

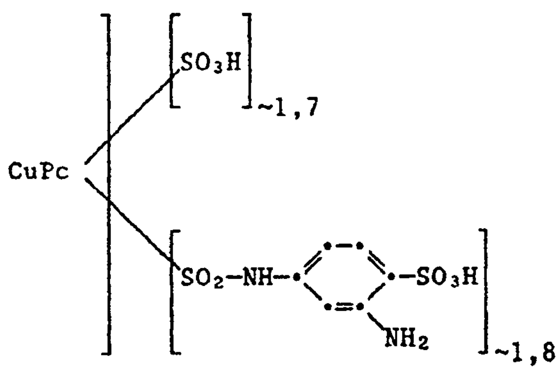

werden in einer Mischung aus 300 Teilen Wasser und 125 Teilen Eis homogen verrührt und mit Natronlauge auf pH 7 eingestellt. Bei 0 bis 5°C gibt man nun eine feine Suspension von 16,6 Teilen Cyanurchlorid in 170 Teilen Eiswasser zu, wobei der pH-Wert mit 10%iger Natronlauge bei 5,3 bis 5,5 gehalten wird. Sobald die Umsetzung vollständig ist, lässt man eine neutrale Lösung von 43 Teilen 1-Amino-4-β-(β'-chloräthylsulfonyl)-äthylaminocarbonylmethoxybenzol-hydrochlorid in 250 Teilen Wasser zutropfen. Man erwärmt alsdann auf 20 bis 30°C und hält 4 Stunden bei dieser Temperatur, wobei der pH-Wert mit Natriumhydrogencarbonat bei 6,5 bis 7 gehalten wird. Anschliessend wird abgekühlt, mit Natriumchlorid ausgesalzen, der Farbstoff abgesaugt und getrocknet. Er entspricht der ungefähren Formel

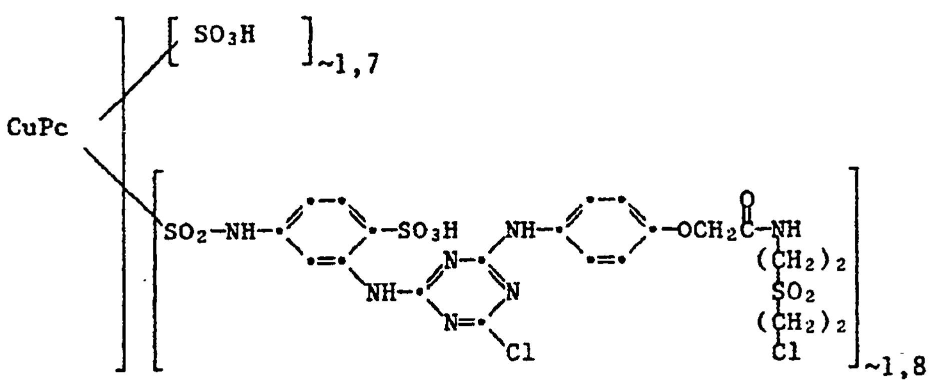

Weitere Farbstoffe, die nach den in den bisherigen Beispielen gegebenen Vorschriften hergestellt werden können, sind die Reaktivfarbstoffe der folgenden Formeln.

| Beispiel | | X | X | Nuance |
|---|---|---|---|---|
| 20 | 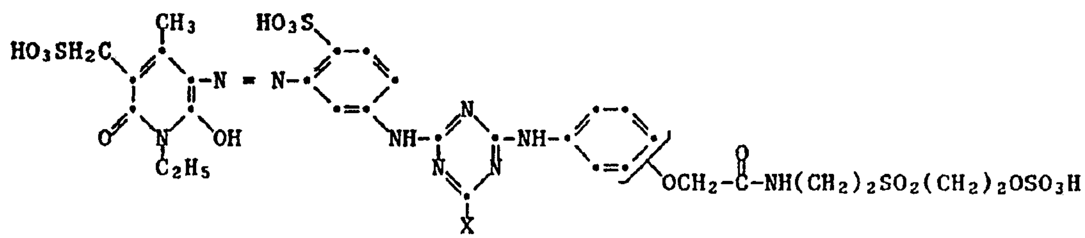 | Cl | F | zitronengelb |
| 21 | 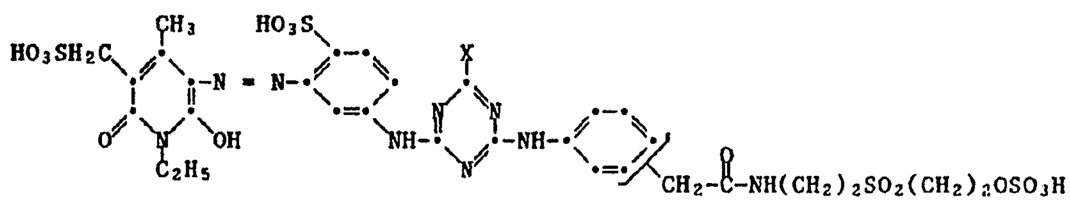 | Cl | F | zitronengelb |
| 22 | 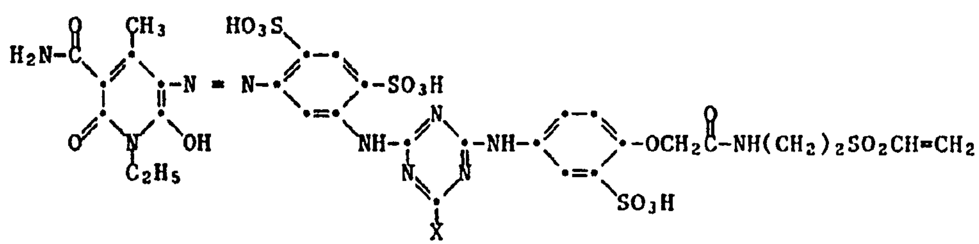 | Cl | F | zitronengelb |

| Beispiel | | X | X | Nuance |
|---|---|---|---|---|
| 23 | 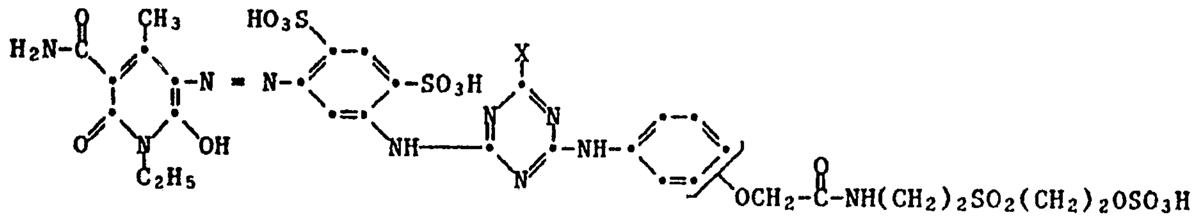 | Cl | F | zitronengelb |
| 24 | 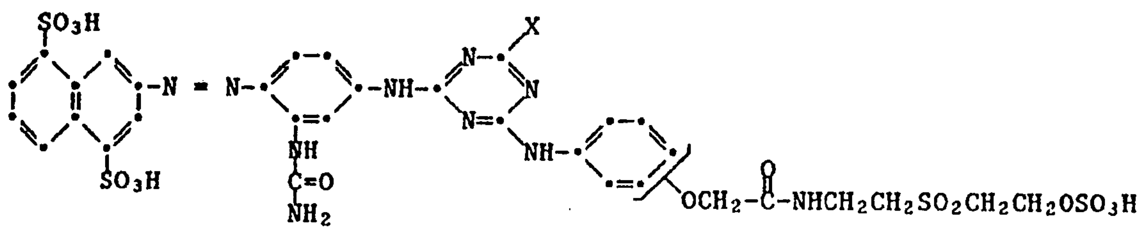 | Cl | F | goldgelb |
| 25 | 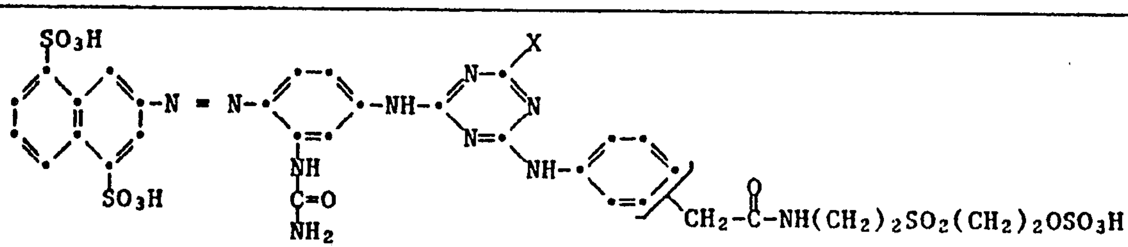 | Cl | F | goldgelb |

| Bei-spiel | | X | X | Nuance |
|---|---|---|---|---|
| 26 | 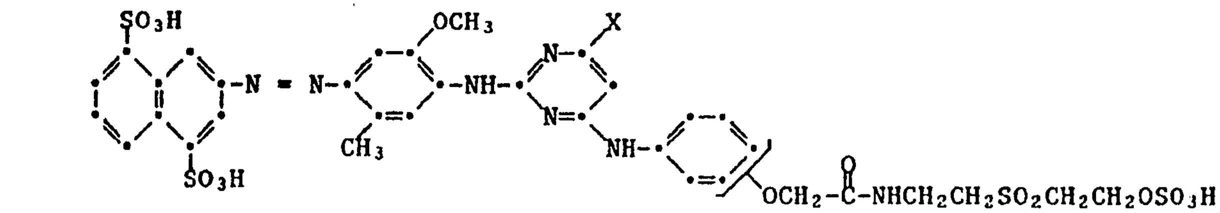 | Cl | F | gold-gelb |
| 27 | 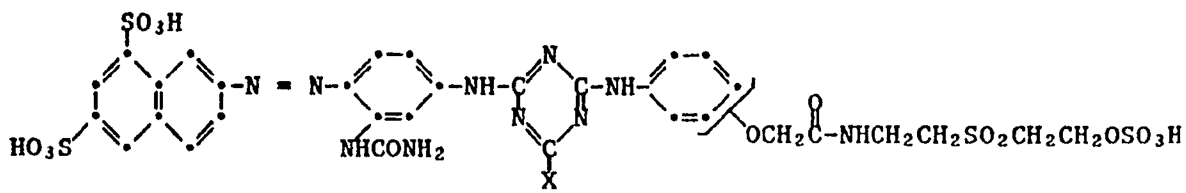 | Cl | F | gold-gelb |
| 28 | 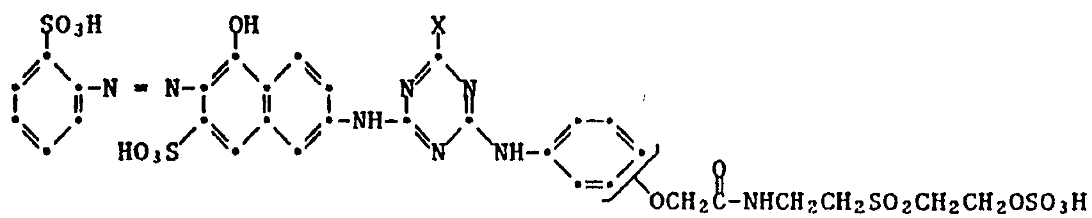 | Cl | F | gelb-stichig orange |

| Beispiel | | X | X | Nuance |
|---|---|---|---|---|
| 29 | 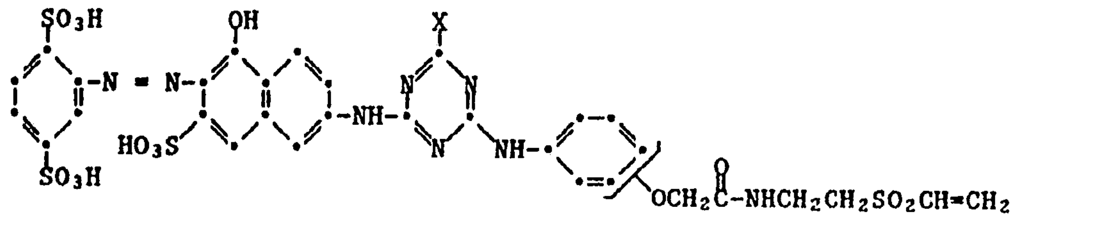 | Cl | F | gelbstichig orange |
| 30 | 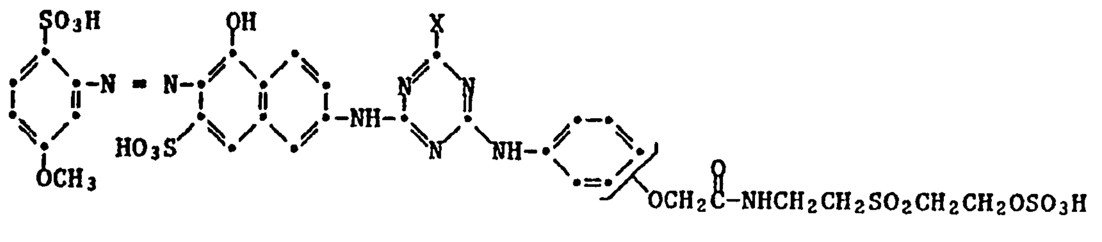 | Cl | F | orange |
| 31 | 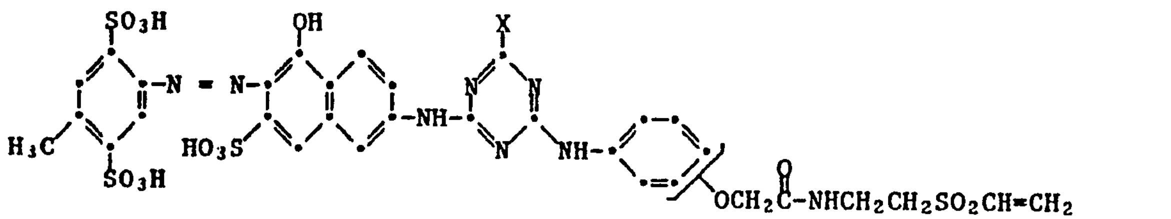 | Cl | F | orange |

| Beispiel | | X | X | Nuance |
|---|---|---|---|---|
| 32 | 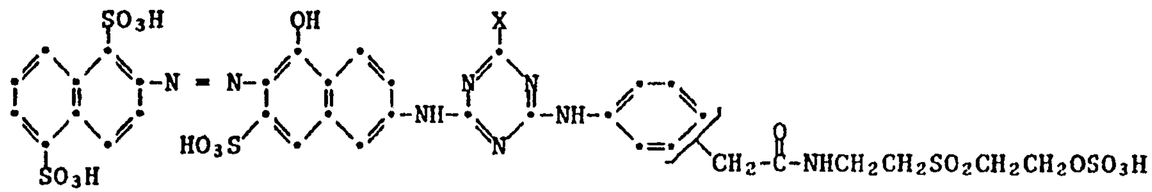 | Cl | F | orange |
| 33 | 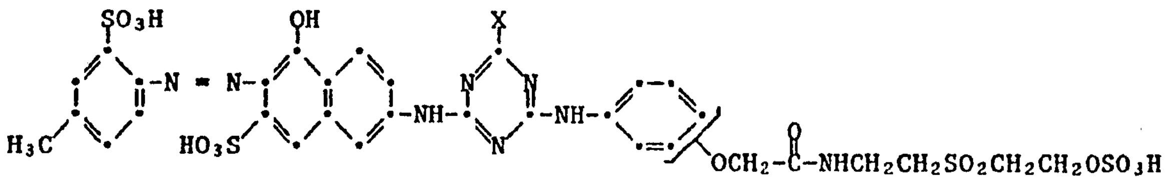 | Cl | F | rot-stichig orange |
| 34 | 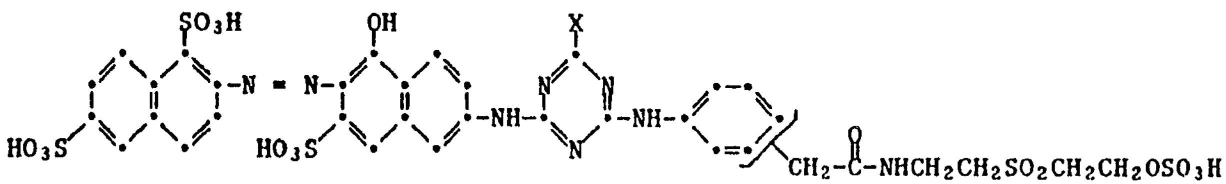 | Cl | F | rot stichig orange |

| Beispiel | | X | X | Nuance |
|---|---|---|---|---|
| 35 | 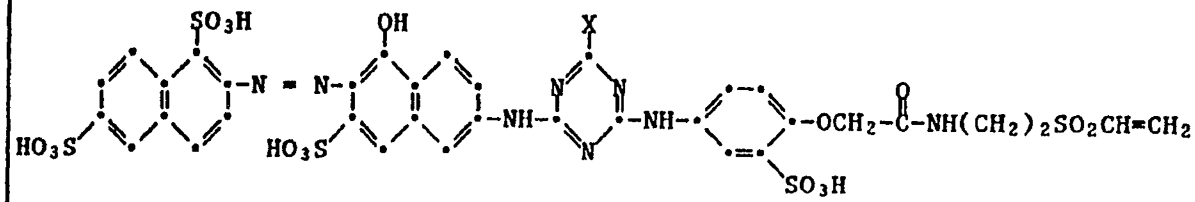 | Cl | F | rot-stichig orange |
| 36 | 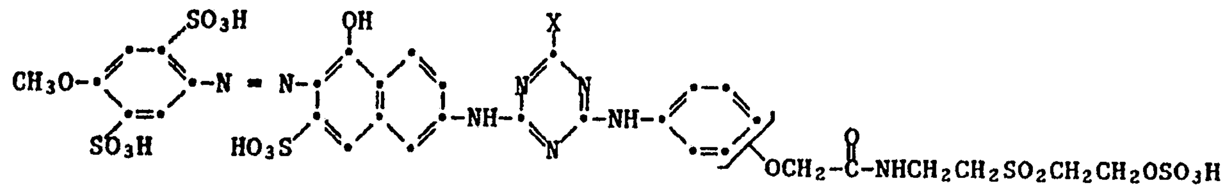 | Cl | F | scharlach |
| 37 | 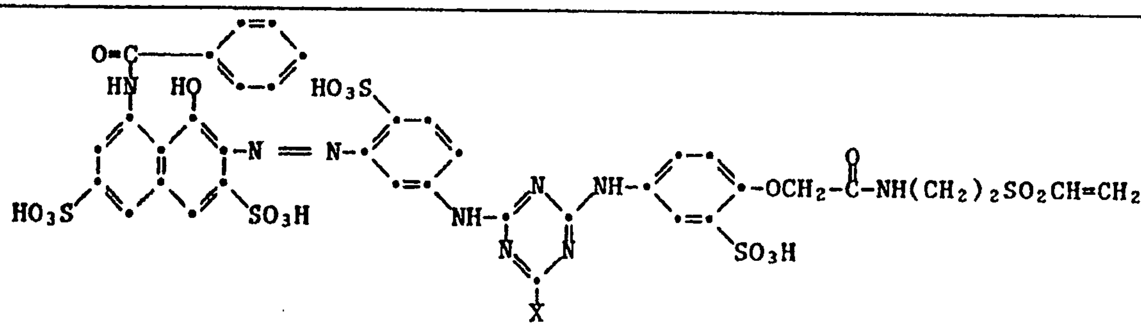 | Cl | F | rot |

| Beispiel | | X | X | Nuance |
|---|---|---|---|---|
| 38 | 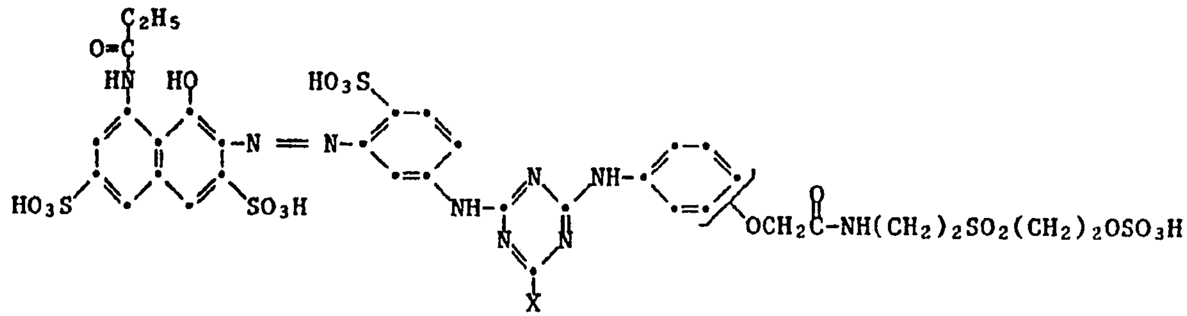 | Cl | F | scharlach |
| 39 | 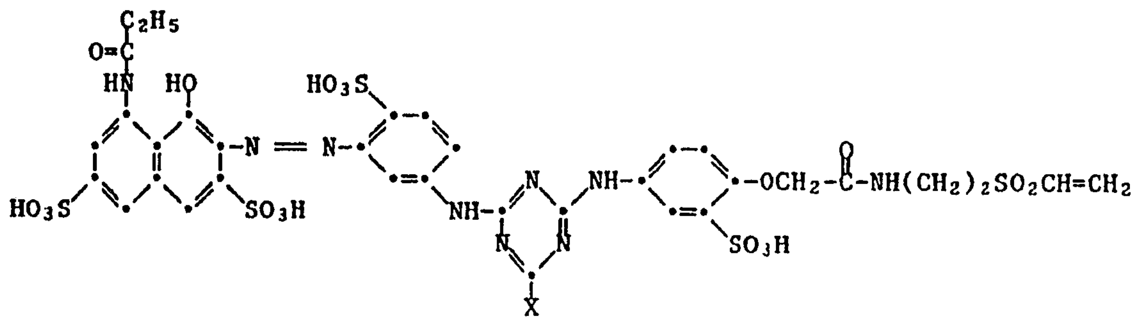 | Cl | F | scharlach |

| Beispiel | | X | X | Nuance |
|---|---|---|---|---|
| 40 | 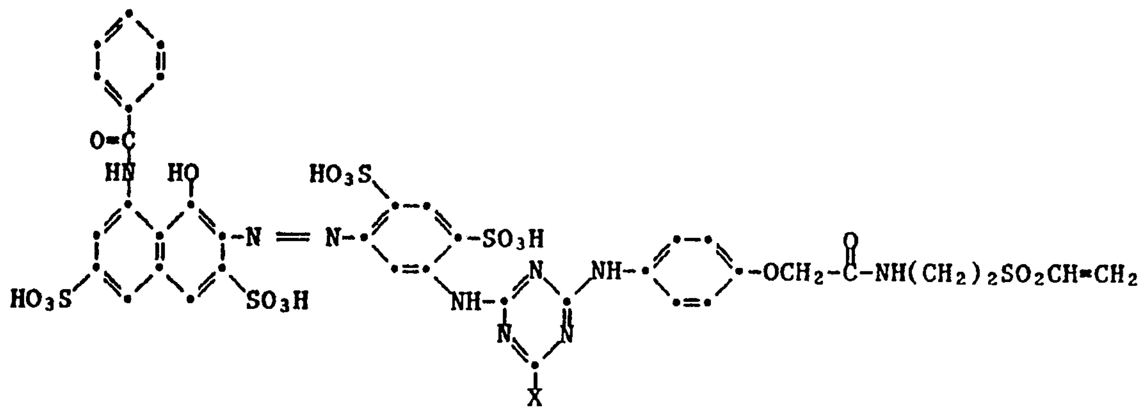 | Cl | F | rot |
| 41 | 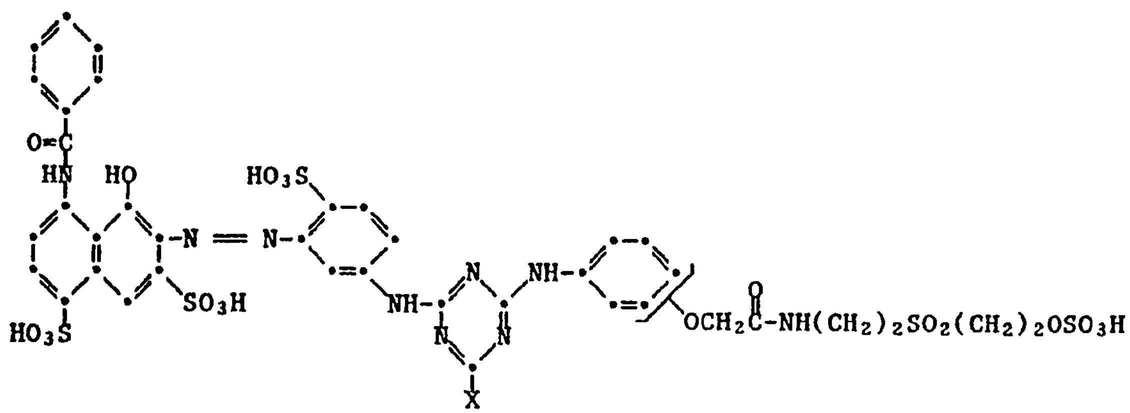 | Cl | F | scharlach |

| Beispiel | | X | X | Nuance |
|---|---|---|---|---|
| 42 | 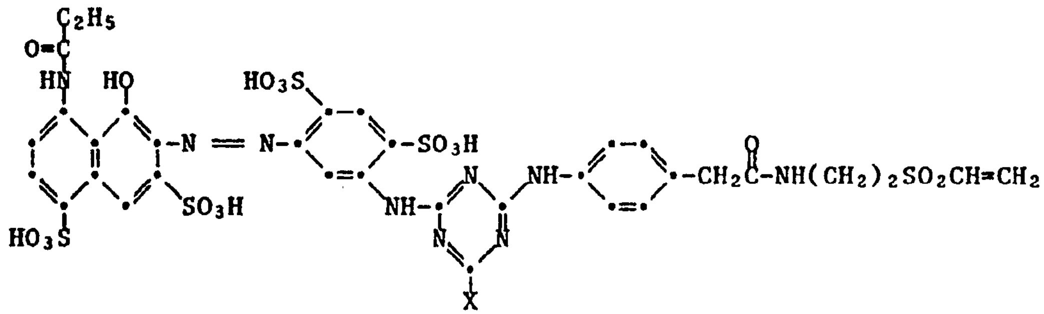 | Cl | F | scharlach |
| 43 | 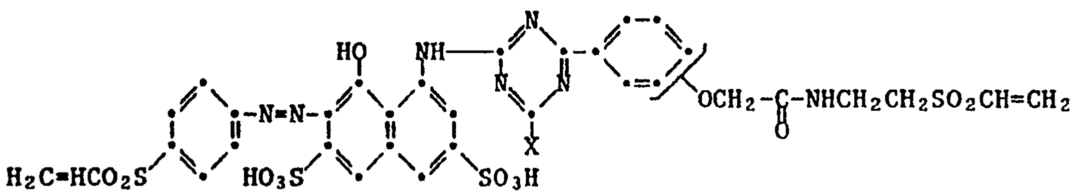 | Cl | F | rot |
| 44 | 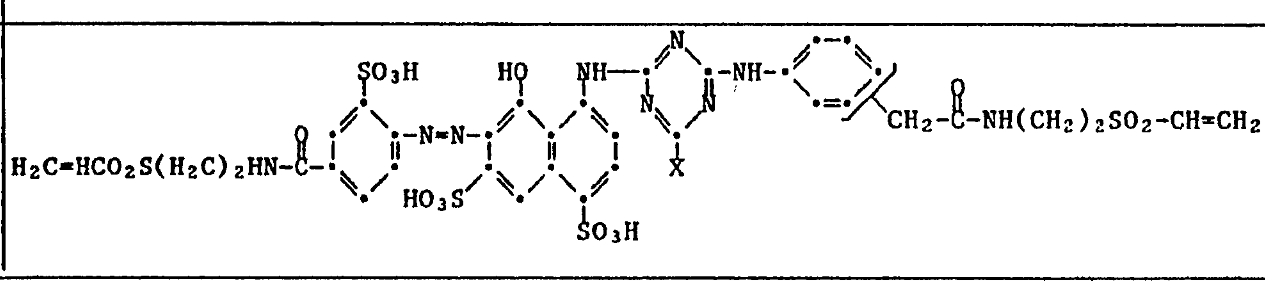 | Cl | F | scharlach |

| Beispiel | | X | X | Nuance |
|---|---|---|---|---|
| 45 | 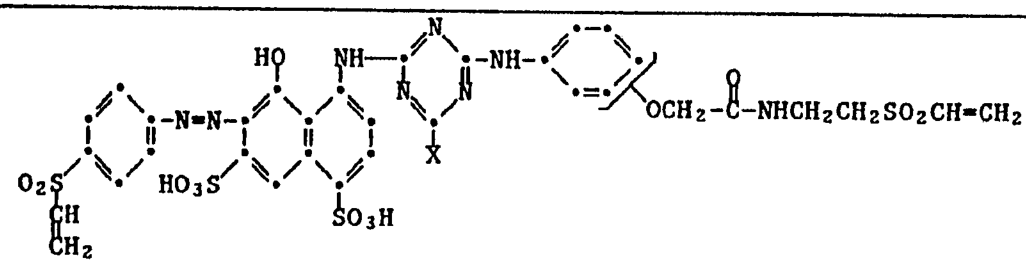 | Cl | F | scharlach |
| 46 | 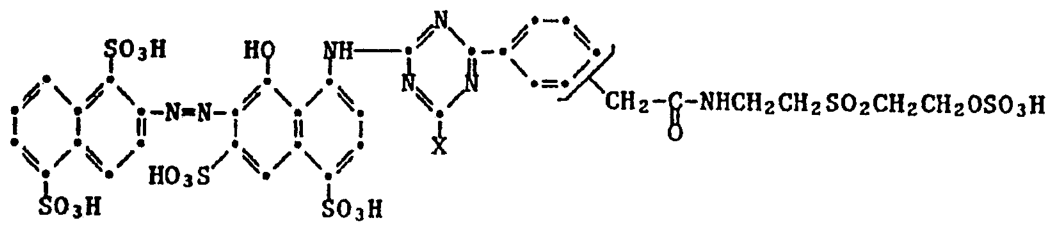 | Cl | F | rot |
| 47 | 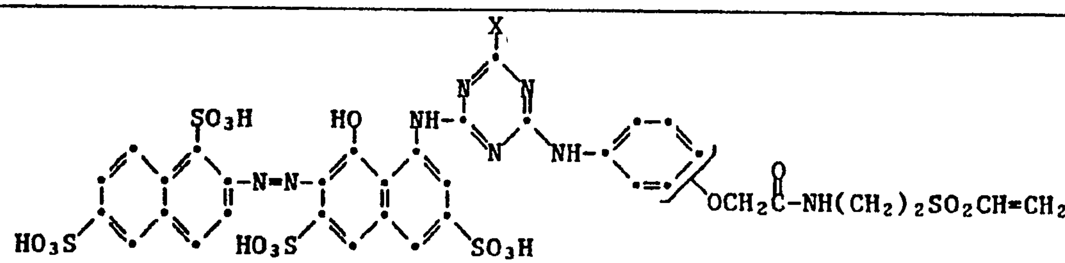 | Cl | F | rot |

| Beispiel | | X | X | Nuance |
|---|---|---|---|---|
| 48 | 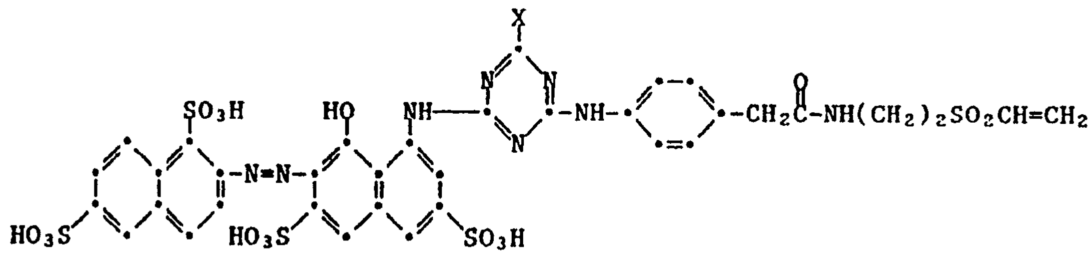 | Cl | F | rot |
| 49 | 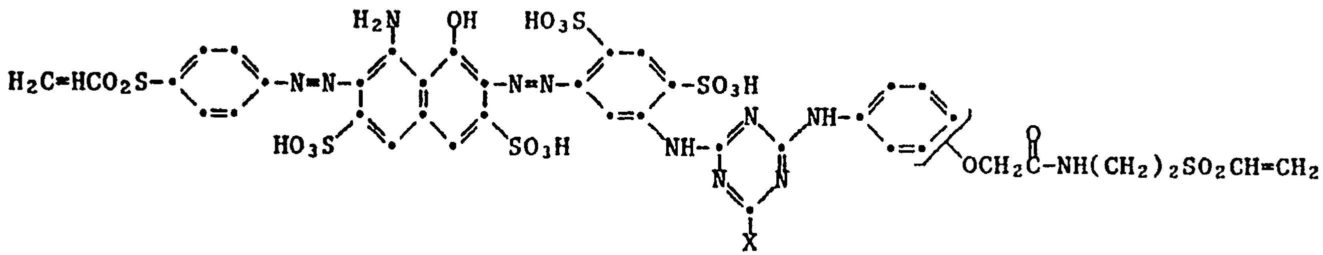 | Cl | F | marine-blau |
| 50 | 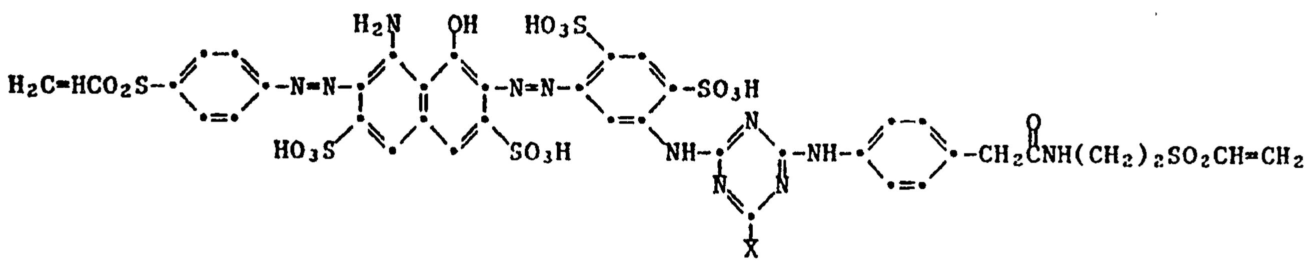 | Cl | F | marine-blau |

| Beispiel | | X | X | Nuance |
|---|---|---|---|---|
| 51 | 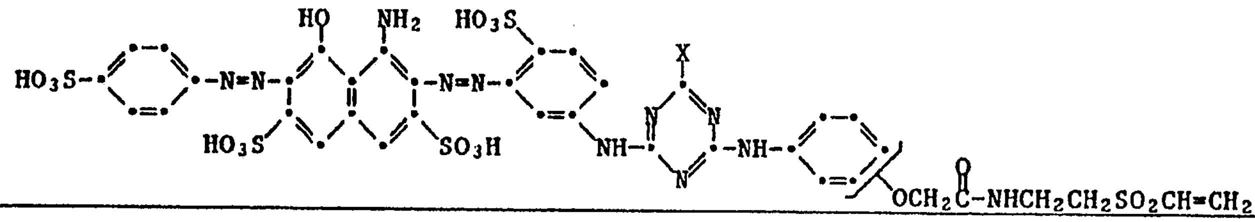 | Cl | F | marine-blau |
| 52 | 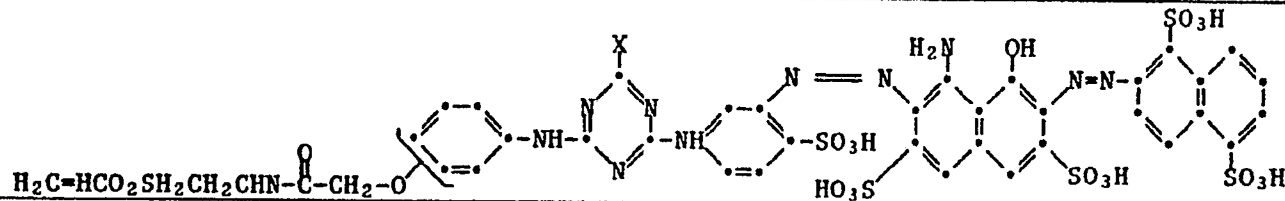 | Cl | F | marine-blau |
| 53 | 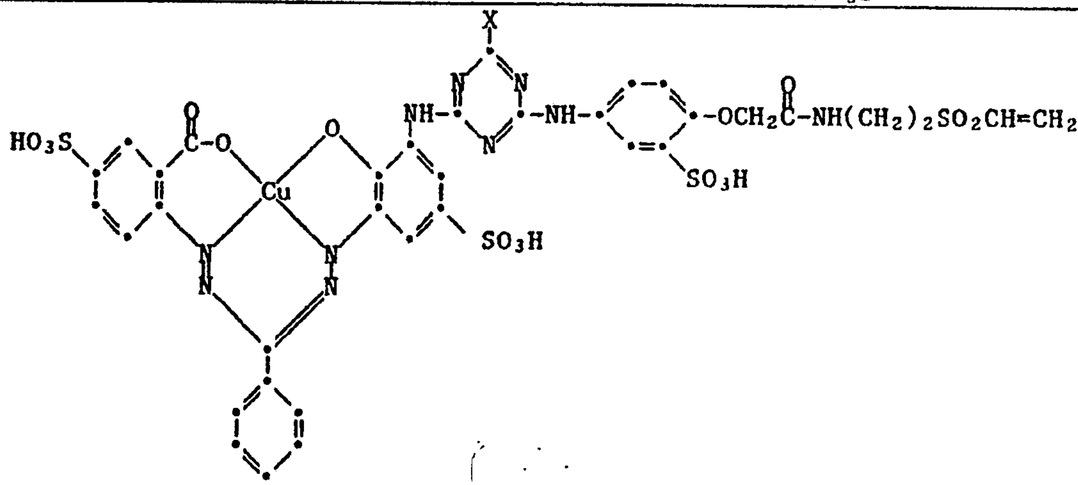 | Cl | F | blau |

| Beispiel | | X | X | Nuance |
|---|---|---|---|---|
| 54 | 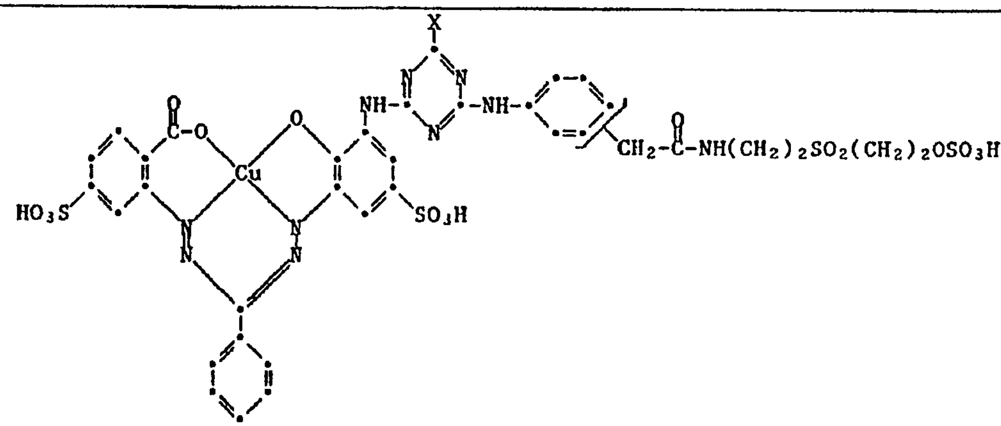 | Cl | F | blau |
| 55 | 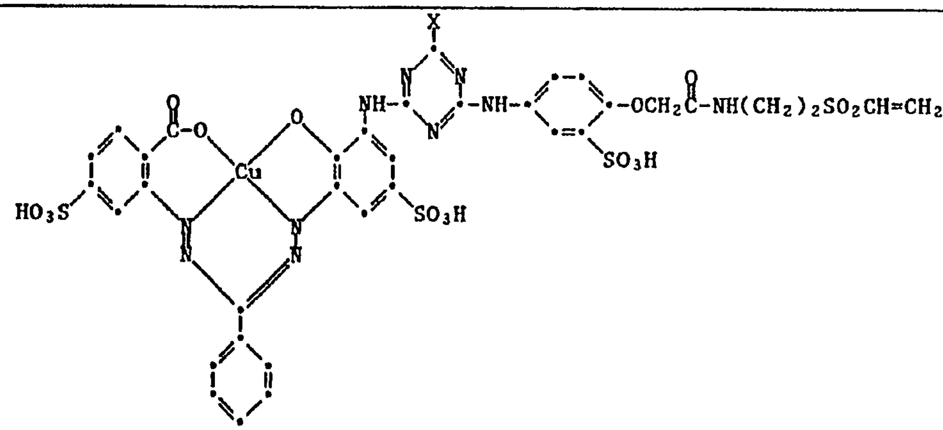 | Cl | F | blau |

Färbevorschrift I

2 Teile des gemäss Beispiel 1 erhaltenen Reaktivfarbstoffes werden in 400 Teilen Wasser gelöst ; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst ; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst ; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teile m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Ansprüche

1. Reaktivfarbstoffe der Formel

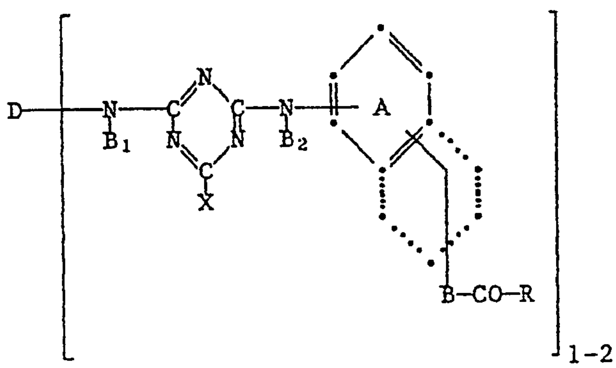

(1),

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes ; $B_1$ und $B_2$ unabhängig voneinander Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann ; X Fluor, Chlor, Brom, Sulfo, Alkylsulfonyl mit 1 bis 4 C-Atomen oder phenylsulfonyl ; B ein Rest $-(CH_2)_n$ oder $-O-(CH_2)_n$, wobei, falls B ein Rest $-O-(CH_2)_n$ ist, B durch das Sauerstoffatom an das Ringsystem A gebunden ist, n = 1 bis 6 ; R ein Rest der Formel

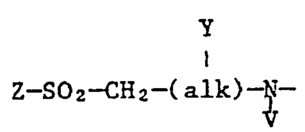

(1a)

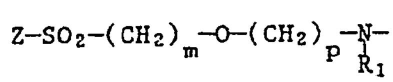

(1b)

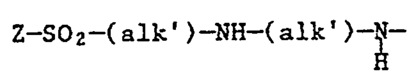

(1c)

oder 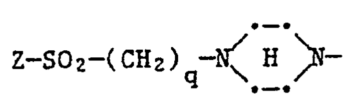

(1d);

Z β-Sulfatoäthyl, β-Thiosulfatoäthyl, β-Phosphatoäthyl, β-Acyloxyäthyl, β-Halogenäthyl oder Vinyl ; alk ein Alkylenrest mit 1 bis 6 C-Atomen oder dessen verzweigte Isomere ; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2$-Z, worin Z die oben angegebene Bedeutung hat ; V Wasserstoff oder ein Alkylrest mit 1 bis 4 C-Atomen, der durch Carboxy- oder Sulfogruppen oder durch deren Derivate, Alkoxygruppen mit 1 bis 2 C-Atomen, Halogen oder Hydroxy substituiert sein kann ; oder ein Rest

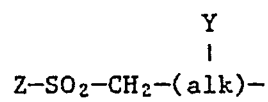

worin Z, alk und Y die angegebenen Bedeutungen haben ; $R_1$ Wasserstoff oder $C_{1-6}$-Alkyl ; alk' unabhängig voneinander Polymethylenreste mit 2 bis 6 C-Atomen oder deren verzweigte Isomere ; m = 1 bis 6, p = 1 bis 6 und q = 1 bis 6 ist ; und der Benzol- bzw. Naphthalinrest A weitersubstituiert sein kann durch Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Di-sulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl und Sulfo.

2. Reaktivfarbstoffe gemäss Anspruch 1, der Formel

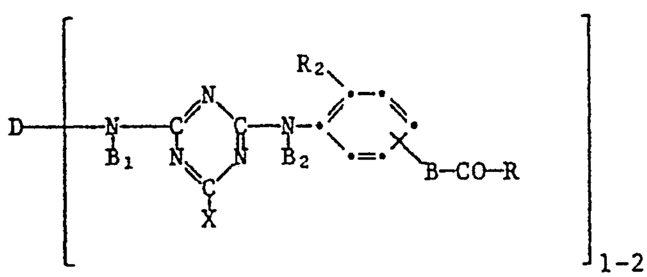

(2),

worin $R_2$ Wasserstoff, $C_{1-4}$-Alkyl, $C_{1-4}$-Alkoxy, Halogen, Hydroxy, Carboxy oder Sulfo ist ; und D, $B_1$, $B_2$, X, B und R die in Anspruch 1 angegebenen Bedeutungen haben.

3. Reaktivfarbstoffe gemäss Anspruch 1, worin D der Rest eines Mono- oder Disazofarbstoffes ist.

4. Reaktivfarbstoffe gemäss Anspruch 1, worin D der Rest eines Metallkomplexazo- oder Formazanfarbstoffes ist.

5. Reaktivfarbstoffe gemäss Anspruch 1, worin D der Rest eines Anthrachinonfarbstoffes ist.

6. Reaktivfarbstoffe gemäss Anspruch 1, worin D der Rest eines Phthalocyaninfarbstoffes ist.

7. Reaktivfarbstoffe gemäss Anspruch 4, worin D der Rest eines 1 : 1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

8. Reaktivfarbstoffe gemäss Anspruch 3, worin D ein Mono- oder Disazofarbstoffrest der Formel

$$D_1\text{-N=N-(M-N=N)}_r\text{-K-} \quad (3A),$$

$$-D_1\text{-N=N-(M-N=N)}_r\text{-K} \quad (3B),$$

$$\text{oder } -D_1\text{-N=N-(M-N=N)}_r\text{-K-} \quad (3C),$$

oder eines davon abgeleiteten Metallkomplexes ; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können ; r = 0 oder 1 ist ; und $D_1$, M und K zusammen mindestens zwei Sulfogruppen, vorzugsweise drei oder vier Sulfogruppen, enthalten.

9. Reaktivfarbstoffe gemäss Anspruch 3, worin D ein Disazofarbstoffrest der Formel

$$D_1\text{-N=N-K-N=N-}D_2\text{–} \quad (4A),$$

$$\text{oder} \ \text{–}D_1\text{-N=N-K-N=N-}D_2\text{–} \quad (4B),$$

$D_1$ und $D_2$ unabhängig voneinander der Rest einer Diazokomponente der Benzol- oder Naphthalinreihe, und K der Rest einer Kupplungskomponente der Naphthalinreihe ist ; wobei $D_1$, $D_2$ und K bei Azofarbstoffen übliche Substituenten, insbesondere Hydroxy-, Amino-, Methyl, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können ; und $D_1$, $D_2$ und K zusammen mindestens zwei Sulfogruppen, vorzugsweise drei oder vier Sulfogruppen enthalten.

10. Reaktivfarbstoffe gemäss Anspruch 5, worin D der Rest eines Anthrachinonfarbstoffes der Formel

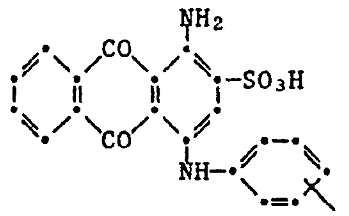

(5)

ist ; wobei der Anthrachinonkern durch eine weitere Sulfogruppe, und der Phenylenrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.

11. Reaktivfarbstoffe gemäss Anspruch 6, worin D der Rest eines Phthalocyaninfarbstoffes der Formel

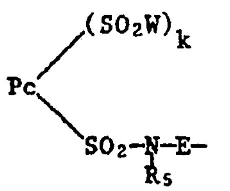

(6),

Pc der Rest eines Kupfer- oder Nickelphthalocyanins ; W –OH und/oder $-NR_3R_4$ ; $R_3$ und $R_4$ unabhängig voneinander Wasserstoff oder Alkyl mit 1 bis 4 Kohlenstoffatomen, das durch Hydroxy oder Sulfo substituiert sein kann ; $R_5$ Wasserstoff oder Alkyl mit 1 bis 4 Kohlenstoffatomen ; E ein Phenylenrest, der durch Alkyl mit 1 bis 4 C-Atomen, Halogen, Carboxy oder Sulfo substituiert sein kann ; oder ein Alkylenrest mit 2 bis 6 C-Atomen, vorzugsweise ein Sulfophenylen- oder Aethylenrest ; und k = 1 bis 3 ist.

12. Reaktivfarbstoffe gemäss Anspruch 8, der Formel

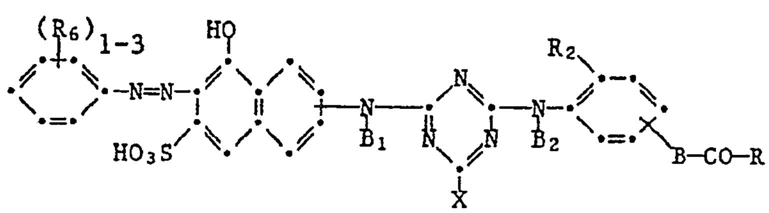

(7),

worin $R_6$ für 1 bis 3 Substituenten aus der Gruppe $C_{1-4}$-Alkyl, $C_{1-4}$-Alkoxy, Halogen, Carboxy und Sulfo steht; und $B_1$, $B_2$, X, B, und R die für Anspruch 2 geltenden Bedeutungen haben.

13. Reaktivfarbstoffe gemäss Anspruch 8, der Formel

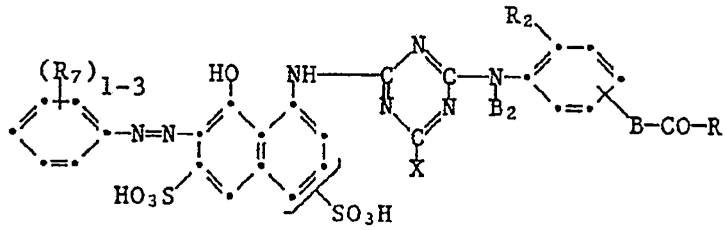

(8),

worin $R_7$ für 1 bis 3 Substituenten aus der Gruppe $C_{1-4}$-Alkyl, $C_{1-4}$-Alkoxy, Halogen, Carboxy und Sulfo steht; und $B_2$, X, B, R und $R_2$ die für Anspruch 2 geltenden Bedeutungen haben.

14. Reaktivfarbstoffe gemäss Anspruch 8, der Formel

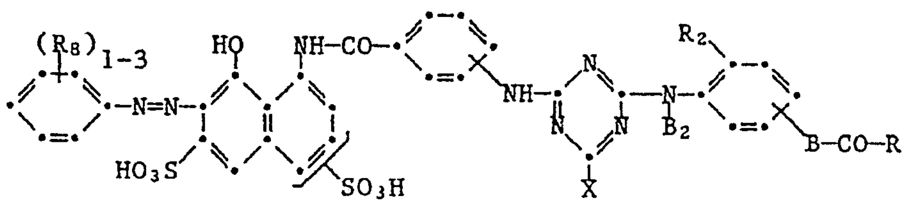

(9),

worin $R_8$ für 1 bis 3 Substituenten aus der Gruppe $C_{1-4}$-Alkyl, $C_{1-4}$-Alkoxy, Halogen, Carboxy und Sulfo steht; und $B_2$, X, B, R und $R_2$ die für Anspruch 2 geltenden Bedeutungen laben.

15. Reaktivfarbstoffe gemäss Anspruch 8, der Formel

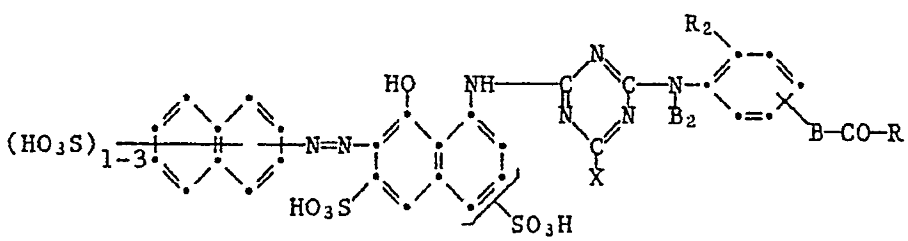

(10),

worin $B_2$, X, B, R und $R_2$ die für Anspruch 2 geltenden Bedeutungen haben.

16. Reaktivfarbstoffe gemäss Anspruch 8, der Formel

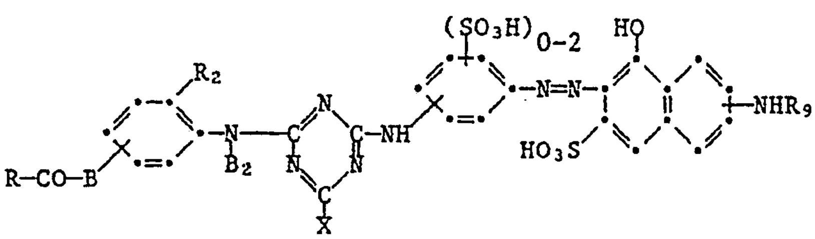

(11),

worin $R_9$ $C_{1-4}$-Alkanoyl oder Benzoyl ist ; und $B_2$, X, B, R und $R_2$ die für Anspruch 2 geltenden Bedeutungen haben.

17. Reaktivfarbstoffe gemäss Anspruch 8, der Formel

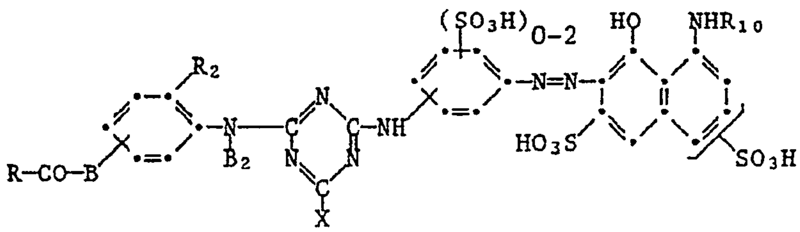

(12),

worin $R_{10}$ $C_{1-4}$-Alkanoyl oder Benzoyl ist ; und $B_2$, X, B, R und $R_2$ die für Anspruch 2 geltenden Bedeutungen haben.

18. Reaktivfarbstoffe gemäss Anspruch 8, der Formel

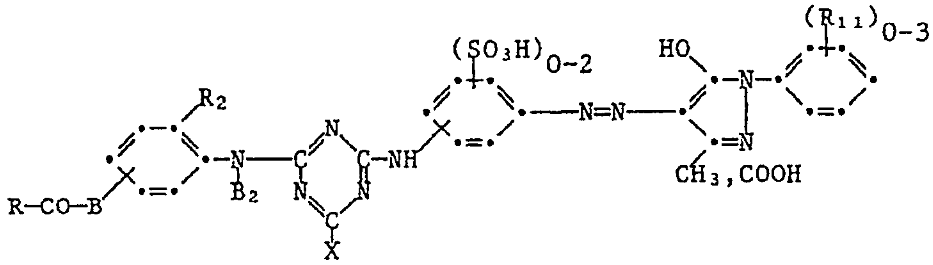

(13),

worin $R_{11}$ für 0 bis 3 Substituenten aus der Gruppe $C_{1-4}$-Alkyl, $C_{1-4}$-Alkoxy, Halogen, Carboxy und Sulfo steht; und $B_2$, X, B, R, und $R_2$ die für Anspruch 2 geltenden Bedeutungen haben.

19. Reaktivfarbstoffe gemäss Anspruch 8, der Formel

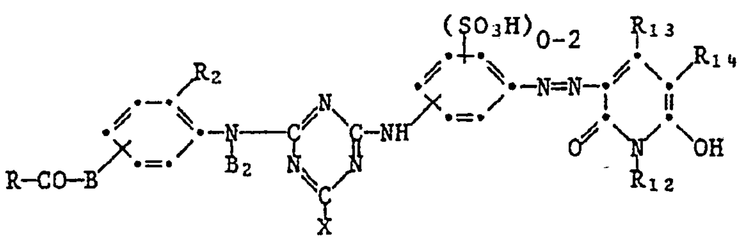

(14),

worin $R_{11}$ und $R_{13}$ unabhängig voneinander Wasserstsoff, $C_{1-4}$-Alkyl oder phenyl, und $R_{14}$ Wasserstoff, Cyano, Carbamoyl oder Sulfomethyl ist ; und $B_2$, X, B, R und $R_2$ die für Anspruch 2 geltenden Bedeutungen haben.

20. Reaktivfarbstoffe gemäss Anspruch 9, der Formel

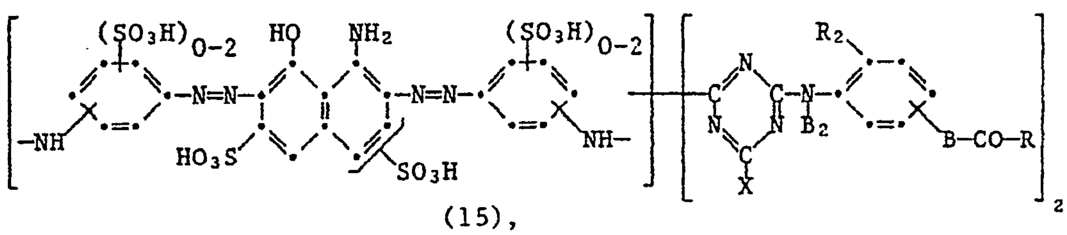

(15),

worin $B_2$, X, B, R und $R_2$ die für Anspruch 2 geltenden Bedeutungen haben.

21. Schwermetallkomplexe von Reaktivfarbstoffen gemäss Anspruch 1.

22. Reaktivfarbstoffe gemäss Anspruch 1, worin D der Rest eines Dioxazinfarbstoffes ist.

23. Reaktivfarbstoffe gemäss Anspruch 22, worin D der Rest eines Dioxazinfarbstoffes der formel

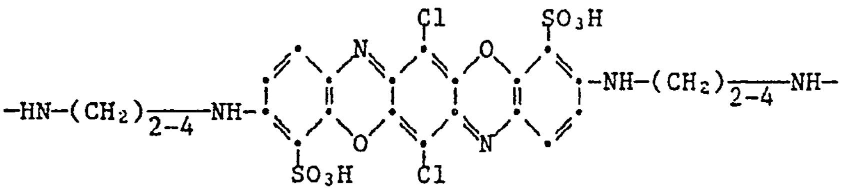

ist.

24. Reaktivfarbstoffe gemäss Anspruch 1, worin Z die β-Sulfatoäthyl-, β-Chloräthyl- oder Vinylgruppe ist.

25. Verfahren zur Herstellung von Reaktivfarbstoffen gemäss Anspruch 1, dadurch gekennzeichnet, dass man einen organischen farbstoff der formel

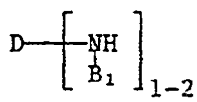

(16)

oder ein Farbstoffvorprodukt, mindestens ein Aequivalent eines s-Triazins der Formel

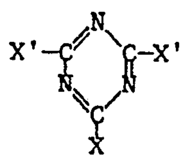

(17),

und mindestens ein Aequivalent eines Amins der Formel

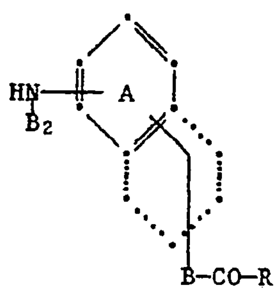

(18)

in beliebiger Folge zu einem Reaktivfarbstoff der Formel (1) umsetzt, wobei D, $B_1$ $B_2$, B, R und A die in Anspruch 1 angegebenen Bedeutungen haben, und X und X' unabhängig voneinander eine der in Anspruch 1 für X genannten Bedeutungen haben ; oder, im Falle der Verwendung von Farbstoffvorprodukten, die erhaltenen Zwischenprodukte in die gewünschten Endfarbstoffe überführt.

26. Verfahren gemäss Anspruch 25, dadurch gekennzeichnet, dass man einen Farbstoff der Formel

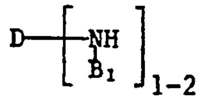

(16)

zunächst mit einem reaktionsfähigen Derivat des s-Triazins der Formel

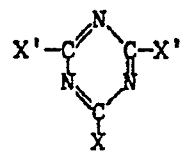

(17)

kondensiert, und die erhaltene Verbindung der Formel

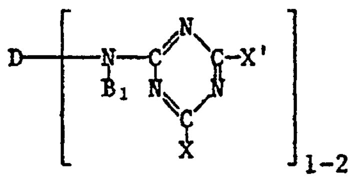

(19)

anschliessend mit einem Amin der Formel

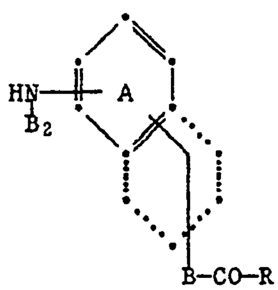

(18)

zu einem Reaktivfarbstoff der Formel (1) kondensiert.

27. Verfahren gemäss Anspruch 25, dadurch gekennzeichnet, dass man eine Komponente des Farbstoffs der Formel (1), die einen Rest der Formel

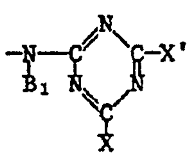

(20)

enthält, mit einer zur Herstellung des Farbstoffs benötigten zweiten Komponente, die gegebenenfalls einen Rest der Formel (20) enthält, umsetzt, und den so erhaltenen Farbstoff der Formel

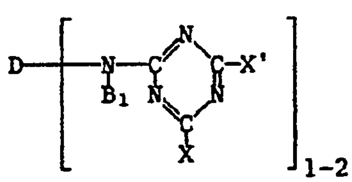

(19)

mit einem Amin der Formel

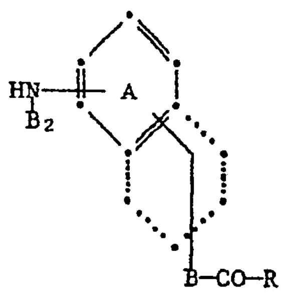

(18)

kondensiert.

28. Verwendung der Reaktivfarbstoffe gemäss Anspruch 1, zum Färben oder Bedrucken von cellulosehaltigen Fasermaterialien.

29. Verwendung gemäss Anspruch 28, zum Färben oder Bedrucken von Baumwolle.

**Claims**

1. A reactive dye of the formula

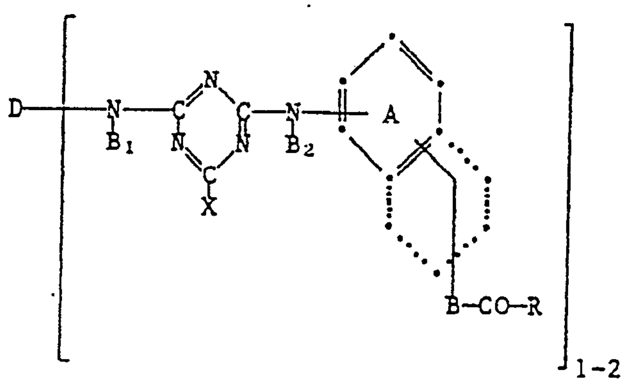

(1)

in which D is the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye, $B_1$ and $B_2$ are independently of each other hydrogen or alkyl which has 1 to 4 carbon atoms and which can be substituted by halogen, hydroxyl, cyano, $C_{1-4}$alkoxy, $C_{1-4}$alkoxycarbonyl, carboxyl, sulfamoyl, sulfo or sulfato, X is fluorine, chlorine, bromine, sulfo, alkylsulfonyl having 1 to 4 C atoms or phenylsulfonyl, B is a $-(CH_2)_n$ or $-O-(CH_2)_n$ radical, and when B is a $-O-(CH_2)_n$ radical, B is bonded to the ring system A by the oxygen atom, n is 1 to 6, R is a radical of the formula

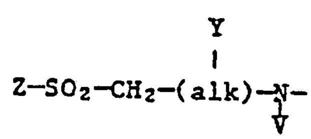

(1a)

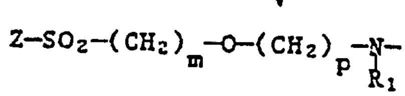

(1b)

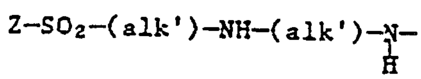

(1c)

or

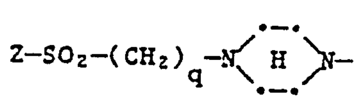

(1d);

Z is β-sulfatoethyl, β-thiosulfatoethyl, β-phosphatoethyl, β-acyloxyethyl, β-haloethyl or vinyl, alk is an alkylene radical having 1 to 6 C atoms or a branched isomer thereof, Y is hydrogen, chlorine, bromine, fluorine, hydroxyl,

sulfato, acyloxy having 1 to 4 C atoms, cyano, carboxyl, alkoxycarbonyl having 1 to 5 C atoms, carbamoyl or an $-SO_2$-Z radical, in which Z is as defined above, V is hydrogen or an alkyl radical which has 1 to 4 C atoms and can be substituted by carboxyl or sulfo groups or by derivatives thereof, or by alkoxy groups having 1 or 2 C atoms, halogen or hydroxyl, or R is a

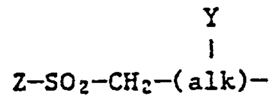

radical in which Z, alk and Y are as defined above, $R_1$ is hydrogen or $C_{1-8}$alkyl, the alk' radicals are independently of each other polymethylene radicals having 2 to 6 C atoms or branched isomers thereof, m is 1 to 6, p is 1 to 6 and q is 1 to 6, and the benzene or naphthalene radical A can be further substituted by alkyl groups having 1 to 4 carbon atoms, alkoxy groups having 1 to 4 carbon atoms, acylamino groups having 1 to 8 carbon atoms, amino, alkylamino having 1 to 4 carbon atoms, phenylamino, N,N-di-β-hydroxyethylamino, N,N-di-β-sulfatoethylamino, sulfobenzylamino, N,N-disulfobenzylamino, alkoxycarbonyl having 1 to 4 carbon atoms in the alkoxy moiety, alkylsulfonyl having 1 to 4 carbon atoms, trifluoromethyl, nitro, cyano, halogen, carbamoyl, N-alkylcarbamoyl having 1 to 4 carbon atoms in the alkyl moiety, sulfamoyl, N-alkylsulfamoyl having 1 to 4 carbon atoms, N-(β-hydroxyethyl)-sulfamoyl, N,N-di-(β-hydroxyethyl)-sulfamoyl, N-phenylsulfamoyl, ureido, hydroxyl, carboxyl, sulfomethyl and sulfo.

2. A reactive dye according to claim 1, of the formula

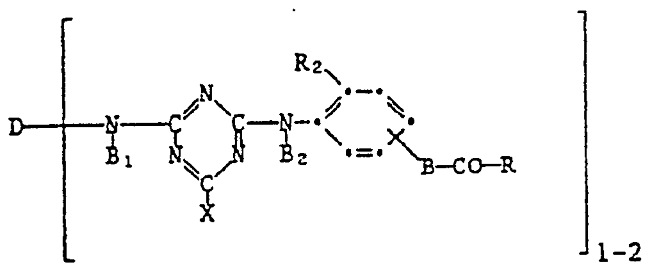

(2)

in which $R_2$ is hydrogen, $C_{1-4}$alkyl, $C_{1-4}$alkoxy, halogen, hydroxyl, carboxyl or sulfo, and D, $B_1$, $B_2$, X, B and R are as defined in claim 1.

3. A reactive dye according to claim 1, wherein D is the radical of a monoazo or disazo dye.

4. A reactive dye according to claim 1, wherein D is the radical of a metal complex azo or formazan dye.

5. A reactive dye according to claim 1, wherein D is the radical of an anthraquinone dye.

6. A reactive dye according to claim 1, wherein D is the radical of a phthalocyanine dye.

7. A reactive dye according to claim 4, wherein D is the radical of a 1 : 1 copper complex azo dye of the benzene or naphthalene series and the copper atom is bonded on each side to a metallatable group in orthoposition relative to the azo bridge.

8. A reactive dye according to claim 3, wherein D is a monoazo or disazo dye radical of the formula

$$D_1\text{-N=N-(M-N=N)}_r\text{-K-} \quad (3A),$$

$$-D_1\text{-N=N-(M-N=N)}_r\text{-K} \quad (3B),$$

$$\text{or } -D_1\text{-N=N-(M-N=N)}_r\text{-K-} \quad (3C),$$

or of a metal complex derived therefrom, $D_1$ is the radical of a diazo component of the benzene or naphthalene series, M is the radical of a middle component of the benzene or naphthalene series, and K is the radical of a coupling component of the benzene, naphthalene, pyrazolone, 6-hydroxy-2-pyridone or acetoacetarylamide series, where $D_1$, M and K can carry substituents customary in azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups or halogen atoms, r is 0 or 1, and $D_1$, M and K together contain at least two sulfo groups, preferably 3 or 4 sulfo groups.

9. A reactive dye according to claim 3, wherein D is a disazo dye radical of the formula

$$D_1\text{-}N{=}N\text{-}K\text{-}N{=}N\text{-}D_2\text{–} \quad (4A),$$

$$\text{or } \text{–}D_1\text{-}N{=}N\text{-}K\text{-}N{=}N\text{-}D_2\text{–} \quad (4B),$$

$D_1$ and $D_2$ are independently of each other the radical of a diazo component of the benzene or naphthalene series, and K is the radical of a coupling component of the naphthalene series, where $D_1$, $D_2$ and K can carry substituents customary with azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups or halogen atoms, and $D_1$, $D_2$ and K together contain at least two sulfo groups, preferably three or four sulfo groups.

10. A reactive dye according to claim 5, wherein D is the radical of an anthraquinone dye of the formula

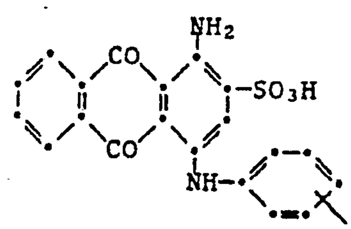

(5)

where the anthraquinone nucleus can be substituted by a further sulfo group and the phenylene radical by alkyl having 1 to 4 C atoms, alkoxy having 1 to 4 C atoms, halogen, carboxyl or sulfo, and the dye preferably contains at least 2 strongly water-solubilizing groups.

11. A reactive dye according to claim 6, wherein D is the radical of a phthalocyanine dye of the formula

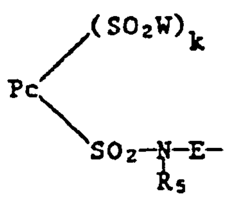

(6)

Pc is the radical of a copper- or nickel-phthalocyanine, W is –OH and/or $-NR_3R_4$, $R_3$ and $R_4$ are independently of each other hydrogen or alkyl having 1 to 4 carbon atoms and can be substituted by hydroxyl or sulfo, $R_5$ is hydrogen or alkyl having 1 to 4 carbon atoms, E is a phenylene radical which can be substituted by alkyl having 1 to 4 C atoms, halogen, carboxyl or sulfo, or is an alkylene radical having 2 to 6 C atoms, preferably a sulfophenylene or ethylene radical, and k is 1 to 3.

12. A reactive dye according to claim 8, of the formula

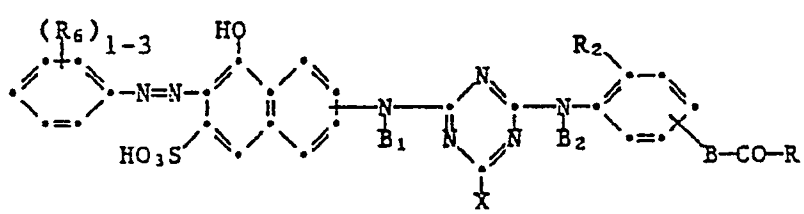

(7)

in which $R_5$ is 1 to 3 substituents from the group consisting of $C_{1-4}$-alkyl, $C_{1-4}$alkoxy, halogen, carboxyl and sulfo, and $B_1$, $B_2$, X, B and R are as defined for claim 2.

13. A reactive dye according to claim 8, of the formula

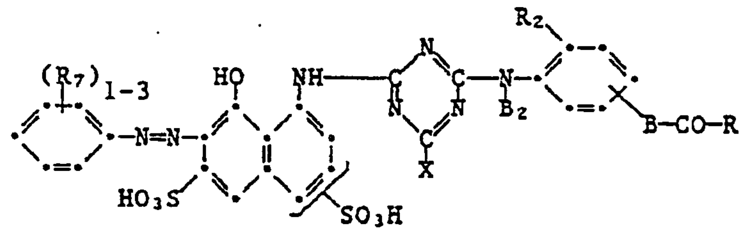

(8)

in which $R_7$ is 1 to 3 substituents from the group consisting of $C_{1-4}$-alkyl, $C_{1-4}$alkoxy, halogen, carboxyl and sulfo, and $B_2$, X, B, R and $R_2$ are as defined for claim 2.

14. A reactive dye according to claim 8, of the formula

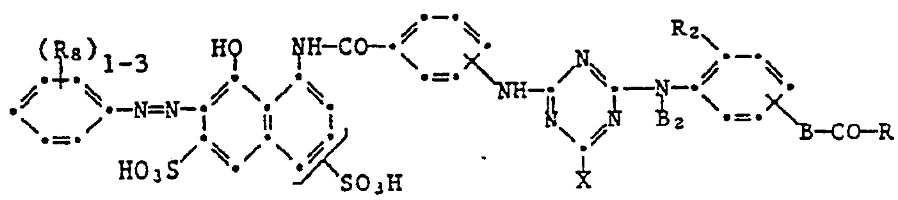

(9)

in which $R_8$ is 1 to 3 substituents from the group consisting of $C_{1-4}$-alkyl, $C_{1-4}$alkoxy, halogen, carboxyl and sulfo, and $B_2$, X, B, R and $R_2$ are as defined for claim 2.

15. A reactive dye according to claim 8, of the formula

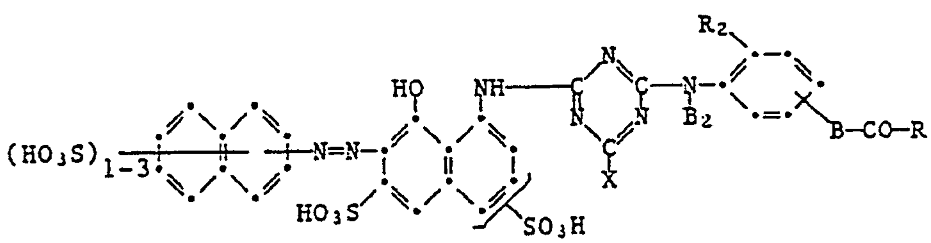

(10)

in which $B_2$, X, B, R and $R_2$ are as defined for claim 2.

16. A reactive dye according to claim 8, of the formula

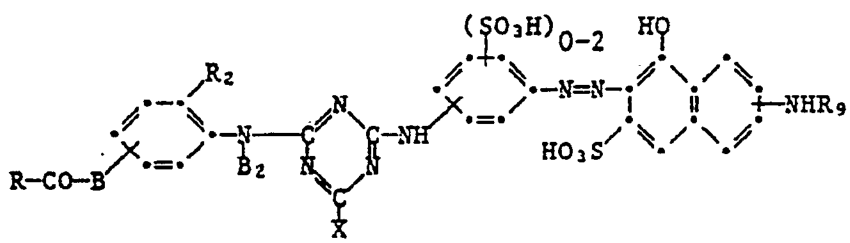

(11)

in which $R_9$ is $C_{1-4}$alkanoyl or benzoyl, and $B_2$, X, B, R and $R_2$ are as defined for claim 2.

17. A reactive dye according to claim 8, of the formula

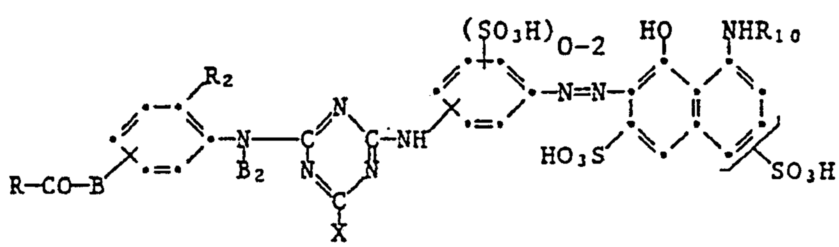

(12)

in which $R_{10}$ is $C_{1-4}$alkanoyl or benzoyl, and $B_2$, X, B, R and $R_2$ are as defined for claim 2.

18. A reactive dye according to claim 8, of the formula

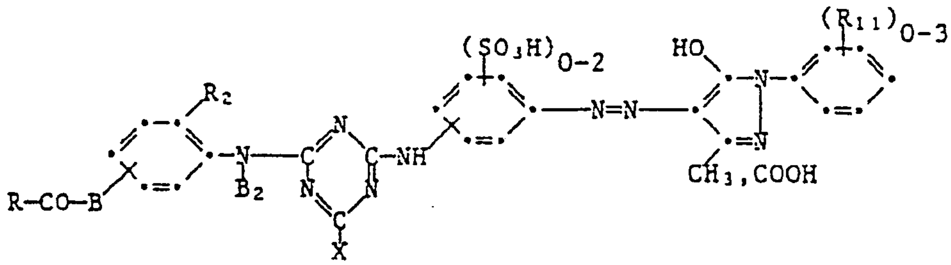

(13)

in which $R_{11}$ is 0 to 3 substituents from the group consisting of $C_{1-4}$alkyl, $C_{1-4}$alkoxy, halogen, carboxyl and sulfo, and $B_2$, X, B, R and $R_2$ are as defined for claim 2.

19. A reactive dye according to claim 8, of the formula

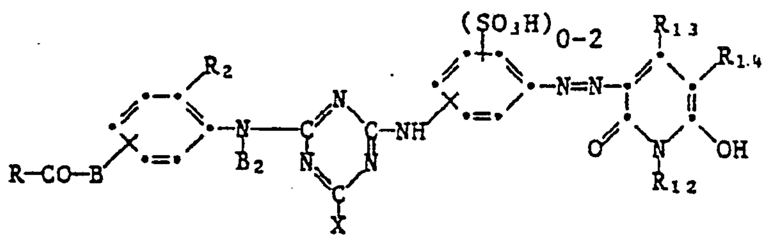

(14)

in which $R_{12}$ and $R_{13}$ are independently of each other hydrogen, $C_{1-4}$-alkyl or phenyl, $R_{14}$ is hydrogen, cyano, carbamoyl or sulfomethyl, and $B_2$, X, B, R and $R_2$ are as defined for claim 2.

20. A reactive dye according to claim 9, of the formula

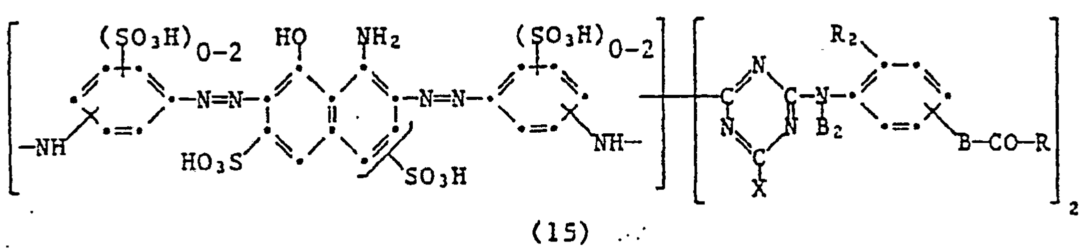

(15)

in which $B_2$, X, B, R and $R_2$ are as defined for claim 2.

21. A heavy-metal complex of a reactive dye according to claim 1.

22. A reactive dye according to claim 1, wherein D is the radical of a dioxazine dye.

23. A reactive dye according to claim 22, wherein D is the radical of a dioxazine dye of the formula

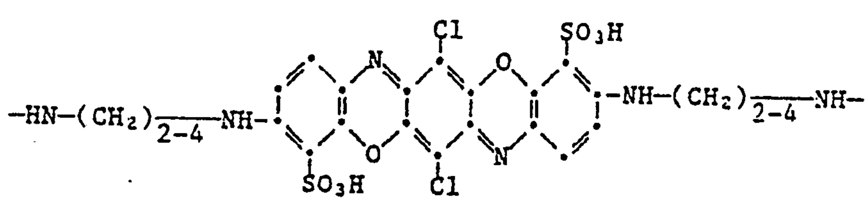

24. A reactive dye according to claim 1, wherein Z is the β-sulfatoethyl, β-chloroethyl or vinyl group.

25. A process for preparing a reactive dye according to claim 1, which comprises reacting an organic dye of the formula

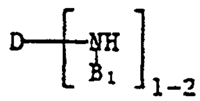

(16)

or a dye precursor, at least one equivalent of an s-triazine of the formula

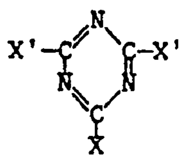

(17)

and at least one equivalent of an amine of the formula

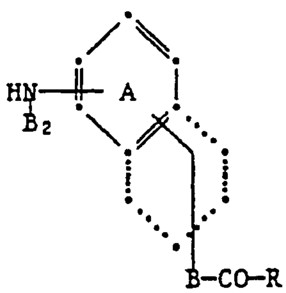

(18)

in any desired order to give a reactive dye of the formula (1), D, $B_1$, $B_2$, B, R and A being as defined for claim 1, and X and X′ independently of each other having one of the meanings mentioned for X in claim 1, or, if dye precursors are used, converting the intermediates obtained to the desired end dyes.

26. A process according to claim 25, wherein a dye of the formula

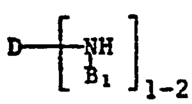

(16)

is first condensed with a reactive derivative of the s-triazine of the formula

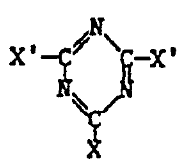

(17)

and the compound obtained of the formula

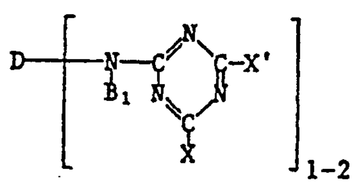

(19)

is then condensed with an amine of the formula

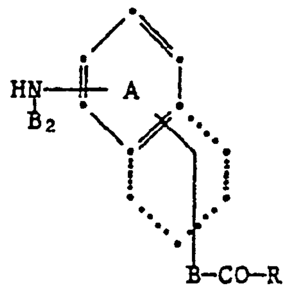

(18)

to give a reactive dye of the formula (1).

27. A process according to claim 25, wherein a component of the dye of formula (1) which contains a radical of the formula

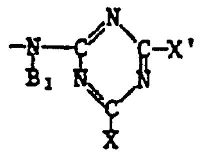

(20)

is reacted with a second component which is required for preparing the dye and can, if desired, contain a radical of the formula (20), and the dye thus obtained of the formula

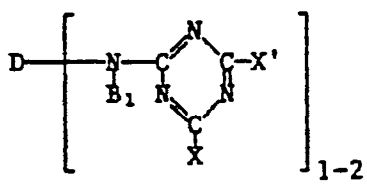

(19)

is condensed with an amine of the formula

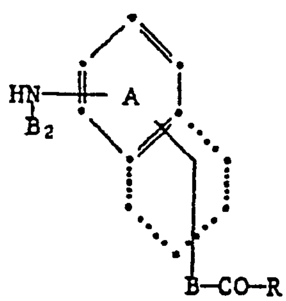

(18)

28. Use of a reactive dye according to claim 1, for dyeing or printing cellulose-containing fibre material.

29. Use according to claim 28, for dyeing or printing cotton

## Revendications

1. Colorants réactifs répondant à la formule

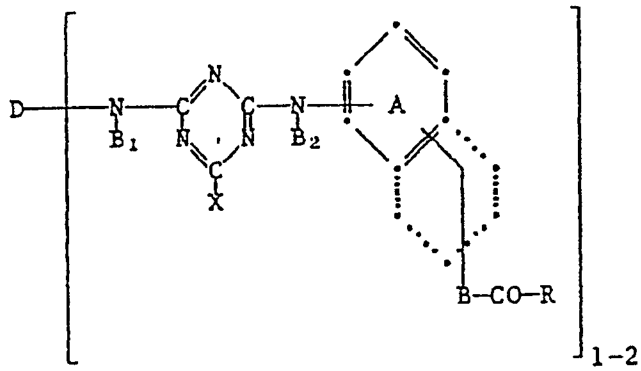

(1),

dans laquelle D désigne le reste d'un colorant monoazoïque, polyazoïque, complexe métallique d'azoïque, anthraquinonique, d'un colorant phtalocyanine, d'un colorant formazan, azométhinique, dioxazinique, phénazinique, stilbénique, de triphénylméthane, de xanthène, de thioxanthone, d'un colorant nitroarylique, naphtoquinonique, pyrènequinonique ou pérylènetétracarbimidique ; $B_1$ et $B_2$ désignent indépendamment l'un de l'autre un atome d'hydrogène ou un groupe alkyle en $C_1$ à $C_4$, qui peut être substitué par un atome d'halogène ou par un groupe hydroxy, cyano, alcoxy en $C_1$ à $C_4$, (alcoxy en $C_1$ à $C_4$) carbonyle, carboxy, sulfamoyle, sulfo ou sulfato ; X est un atome de fluor, de chlore ou de brome ou un groupe sulfo, alkylsulfonyle en $C_1$ à $C_4$ ou phénylsulfonyle ; B est un radical $-(CH_2)_n$ ou $-O-(CH_2)_n$, B étant lié au système cyclique A par l'atome d'oxygène dans le cas où B est un radical $-O-(CH_2)_n$, n = 1 à 6 ; R est un radical répondant à la formule

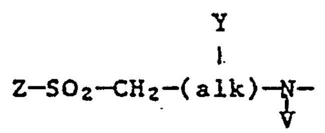

(1a)

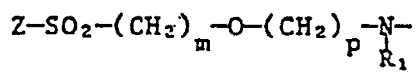

(1b)

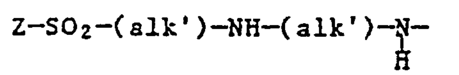

(1c)

ou 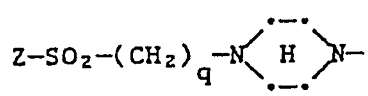

(1d);

Z est un groupe β-sulfatoéthyle, β-thiosulfatoéthyle, β-phosphatoéthyle, β-acyloxyéthyle, β-halogénoéthyle ou vinyle ; alk désigne un radical alkylène en $C_1$ à $C_6$ ou ses isomères ramifiés ; Y est un atome d'hydrogène, de chlore, de brome ou de fluor, ou un groupe hydroxy, sulfato, acyloxy en $C_1$ à $C_4$, cyano, carboxy, alcoxycarbonyle en $C_1$ à $C_5$, carbamoyle, ou un radical $-SO_2-Z$ dans lequel Z a la signification indiquée ; V désigne un atome d'hydrogène ou un radical alkyle en $C_1$ à $C_4$, qui peut être substitué par des groupes carboxy ou sulfo ou par leurs dérivés, par des groupes alcoxy en $C_1$ à $C_2$, par un atome d'halogène ou par un groupe hydroxy; ou un radical

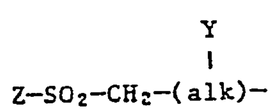

dans lequel Z, alk et Y ont les significations indiquées ; $R_1$ désigne un atome d'hydrogène ou un groupe alkyle en $C_1$ à $C_6$ ; les alk' désignent indépendamment l'un de l'autre des radicaux polyméthylène en $C_2$ à $C_6$ ou leurs isomères ramifiés ; m = 1 à 6, p = 1 à 6 et q = 1 à 6 ; et le radical benzène ou naphtalène A peut encore être substitué par des groupes alkyle en $C_1$ à $C_4$, des groupes alcoxy en $C_1$ à $C_4$, des groupes acylamino en $C_1$ à $C_8$, amino, alkylamino en $C_1$ à $C_4$, phénylamino, N,N-di-β-hydroxyéthylamino, N,N-di-β-sulfatoéthylamino, sulfobenzylamino, N,N-disulfobenzylamino, alcoxycarbonyle ayant 1 à 4 atomes de carbone dans le radical alcoxy, alkylsulfonyle en $C_1$ à $C_4$, trifluorométhyle, nitro, cyano, des atomes d'halogène, des groupes carbamoyle, N-alkylcarbamoyle ayant 1 à 4 atomes de carbone dans le radical alkyle, sulfamoyle, N-alkylsulfamoyle en $C_1$ à $C_4$, N-(β-hydroxyéthyle)-sulfamoyle, N,N-di-(β-hydroxyéthyl)-sulfamoyle, N-phénylsulfamoyle, uréido, hydroxy, carboxy, sulfométhyle et sulfo.

2. Colorants réactifs selon la revendication 1, répondant à la formule

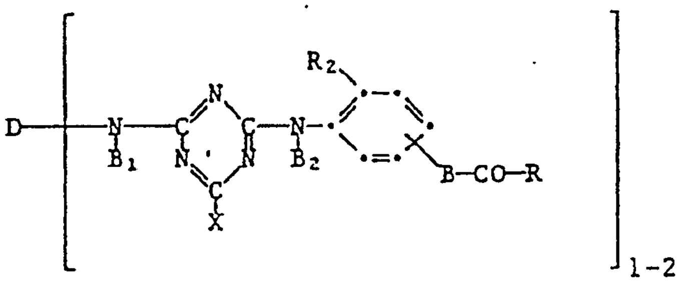

(2),

dans laquelle $R_2$ désigne un atome d'hydrogène ou d'halogène ou un groupe alkyle en $C_1$ à $C_4$, alcoxy en $C_1$ à $C_4$, ou d'halogène, hydroxy, carboxy ou sulfo ; et D, $B_1$, $B_2$, X, B et R ont les significations indiquées dans la revendication 1.

3. Colorants réactifs selon la revendication 1, dans lesquels D est le reste d'un colorant monoazoïque ou disazoïque.

4. Colorants réactifs selon la revendication 1, dans lesquels D est le reste d'un complexe métallique d'un colorant azoïque ou d'un colorant formazan.

5. Colorants réactifs selon la revendication 1, dans lesquels D est le reste d'un colorant anthraquinonique.

6. Colorants réactifs selon la revendication 1, dans lesquels D est le reste d'un colorant phtalocyanine.

7. Colorants réactifs selon la revendication 4, dans lesquels D est le reste d'un complexe de cuivre 1 : 1 d'un colorant azoïque de la série du benzène ou du naphtalène, et l'atome de cuivre est lié à chacun de deux groupes métallables en position ortho de part et d'autre du pont azo.

8. Colorants réactifs selon la revendication 3, dans lesquels D est un reste de colorant monoazoïque ou disazoïque répondant à la formule

$$D_1\text{-N=N(M-N=N)}_r\text{-K-} \quad (3A),$$

$$-D_1\text{-N=N-(M-N=N)}_r\text{-K} \quad (3B),$$

$$\text{ou } -D_1\text{-N=N-(M-N=N)}_r\text{-K-} \quad (3C),$$

ou d'un complexe métallique de ceux-ci ; $D_1$ est le radical d'un constituant diazo de la série du benzène ou du naphtalène, M est le reste d'un constituant médian de la série du benzène ou du naphtalène et K est le reste d'un copulant de la série du benzène, du napthalène, de la pyrazolone, de la 6-hydroxypyridone-(2) ou des acétoacétarylamides, $D_1$, M et K pouvant porter des substituants habituels chez les colorants azoïques, en particulier des groupes hydroxy, amino, méthyle, éthyle, méthoxy ou éthoxy, des groupes alcanoylamino en $C_2$ à $C_4$ éventuellement substitués, des groupes benzoylamino éventuellement substitués ou des atomes d'halogène ; r vaut 0 ou 1 ; et $D_1$, M et K contiennent ensemble au moins deux groupes sulfo, de préférence trois ou quatre groupes sulfo.

9. Colorants réactifs selon la revendication 3, dans lesquels D est un reste de colorant disazoïque répondant à la formule

$$D_1\text{-N=N-K-N=N-}D_2\text{-} \quad (4A),$$

$$\text{ou } -D_1\text{-N=N-K-N=N-}D_2\text{-} \quad (4B),$$

$D_1$ et $D_2$ sont indépendamment l'un de l'autre le reste d'un constituant diazo de la série du benzène ou du naphtalène, et K est le radical d'un copulant de la série du naphtalène ; $D_1$, $D_2$ et K pouvant porter des substituants habituels chez les colorants azoïques, en particulier des groupes hydroxy, amino, méthyle, éthyle, méthoxy ou éthoxy, des groupes alcanoylamino en $C_2$ à $C_4$ éventuellement substitués, des groupes benzoylamino éventuellement substitués ou des atomes d'halogène ; et $D_1$, $D_2$ et K contiennent ensemble au moins deux groupes sulfo, de préférence trois ou quatre groupes sulfo.

10. Colorants réactifs selon la revendication 5, dans lesquels D est le reste d'un colorant anthraquinonique

répondant à la formule

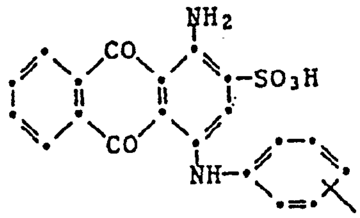

(5)

le noyau anthraquinonique pouvant être substitué par un autre groupe sulfo et le radical phénylène par un groupe alkyle en $C_1$ à $C_4$ ou alcoxy en $C_1$ à $C_4$, par un atome d'halogène ou par un groupe carboxy ou sulfo, et le colorant contenant de préférence au moins 2 groupes fortement hydrosolubilisants.

11. Colorants réactifs selon la revendication 6, dans lesquels D est le reste d'un colorant phtalocyanine répondant à la formule

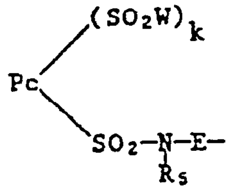

(6),

dans laquelle Pcest le reste d'une phtalocyanine de cuivre ou de nickel ; W est un groupe $-OH$ et/ou $-NR_3R_4$; $R_3$ et $R_4$ sont indépendamment l'un de l'autre un atome d'hydrogène ou un groupe alkyle en $C_1$ à $C_4$ qui peut être substitué par un groupe hydroxy ou sulfo ; $R_5$ est un atome d'hydrogène ou un groupe alkyle en $C_1$ à $C_4$; E un radical phénylène qui peut être substitué par un groupe alkyle en $C_1$ à $C_4$, par un atome d'halogène ou par un groupe carboxy ou sulfo ; ou un radical alkylène en $C_2$ à $C_6$, de préférence un radical sulfophénylène ou éthylène ; et K = 1 à 3.

12. Colorants réactifs selon la revendication 8 répondant à la formule

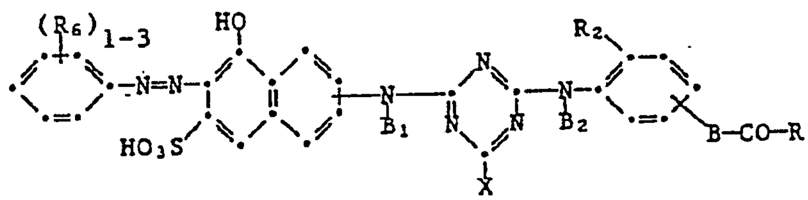

(7),

dans laquelle $R_6$ désigne 1 à 3 substituants choisis parmi alkyle en $C_1$ à $C_4$, alcoxy en $C_1$ à $C_4$, halogène, carboxy et sulfo ; et $B_1$, $B_2$, X, B, et R ont les significations indiquées dans la revendication 2.

13. Colorants réactifs selon la revendication 8, répondant à la formule

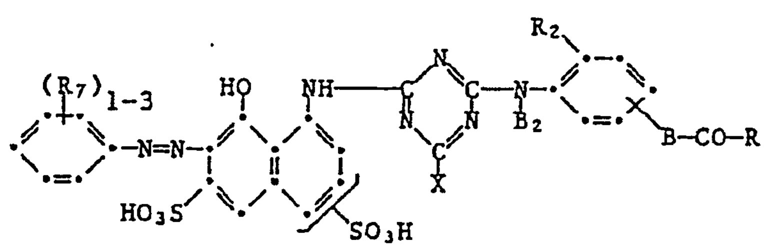

(8),

dans laquelle $R_7$ désigne 1 à 3 substituants choisis parmi alkyle en $C_1$ à $C_4$, alcoxy en $C_1$ à $C_4$, halogène, carboxy et sulfo ; et $B_2$, X, B, R et $R_2$ ont les significations indiquées dans la revendication 2.

14. Colorants réactifs selon la revendication 8, répondant à la formule

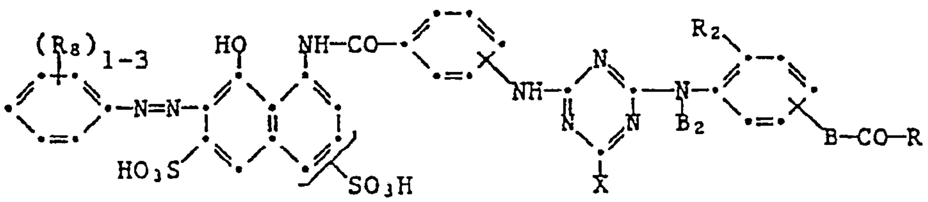
(9),

dans laquelle $R_8$ désigne 1 à 3 substituants choisis parmi alkyle en $C_1$ à $C_4$, alcoxy en $C_1$ à $C_4$, halogène, carboxy et sulfo ; et $B_2$, X, B, R et $R_2$ ont les significations indiquées dans la revendication 2.

15. Colorants réactifs selon la revendication 8, répondant à la formule

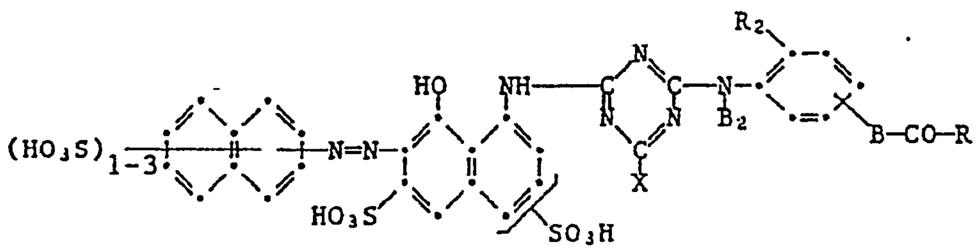
(10),

dans laquelle $B_2$, X, B, R et $R_2$ ont les significations indiquées dans la revendication 2.

16. Colorants réactifs selon la revendication 8, répondant à la formule

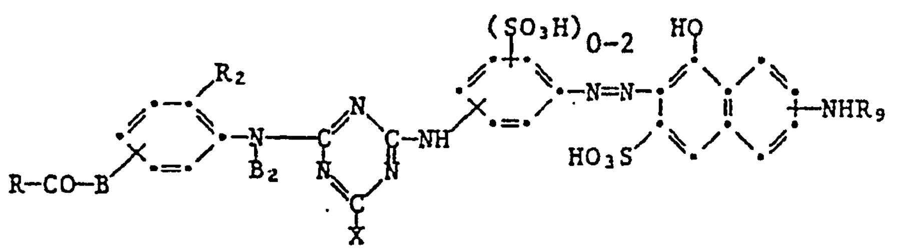
(11),

dans laquelle $R_9$ désigne un groupe alcanoyle en $C_1$ à $C_4$ ou benzoyle ; et $B_2$, X, B, R et $R_2$ ont les significations indiquées dans la revendication 2.

17. Colorants réactifs selon la revendication 8, répondant à la formule

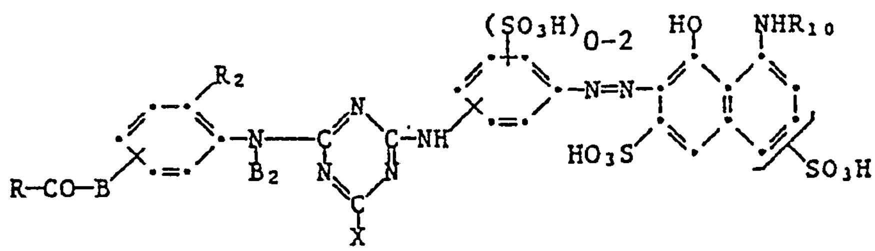
(12),

dans laquelle $R_{10}$ est un groupe alcanoyle en $C_1$ à $C_4$ ou benzoyle ; et $B_2$, X, B, R et $R_2$ ont les significations indiquées dans la revendication 2.

18. Colorants réactifs selon la revendication 8, répondant à la formule

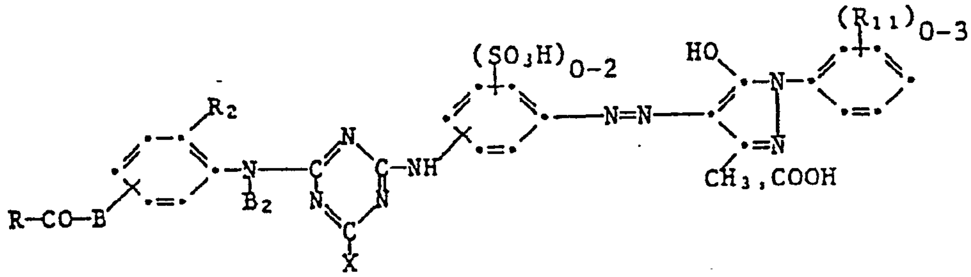

(13),

dans laquelle $R_{11}$ désigne 0 à 3 substituants choisis parmi alkyle en $C_1$ à $C_4$, alcoxy en $C_1$ à $C_4$, halogène, carboxy et sulfo ; et $B_2$, X, B, R et $R_2$ ont les significations indiquées dans la revendication 2.

19. Colorants réactifs selon la revendication 8, répondant à la formule

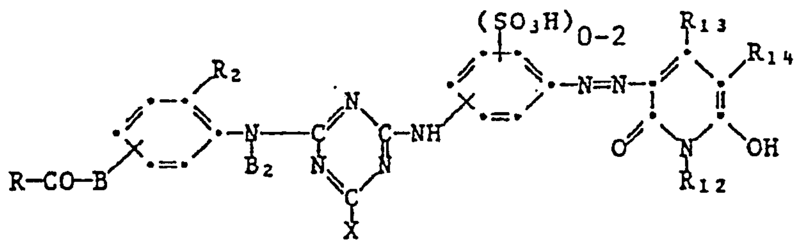

(14),

dans laquelle $R_{12}$ et $R_{13}$ sont indépendamment l'un de l'autre un atome d'hydrogène ou un groupe alkyle en $C_1$ à $C_4$ ou phényle, et $R_{14}$ est un atome d'hydrogène ou un groupe cyano, carbamoyle ou sulfométhyle ; et $B_2$, X, B, R et $R_2$ ont les significations indiquées dans la revendication 2.

20. Colorants réactifs selon la revendication 9, répondant à la formule

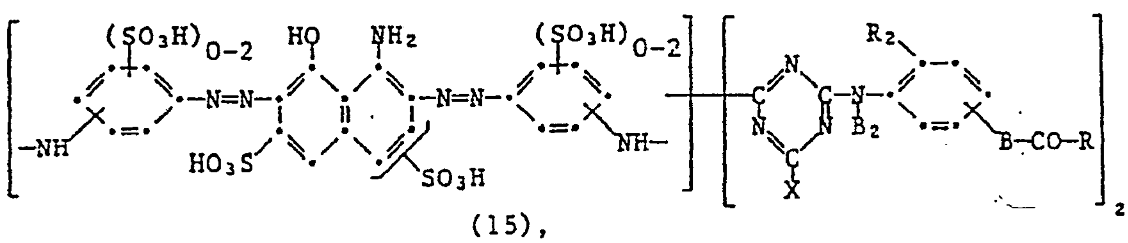

(15),

dans laquelle $B_2$, X, B, R et $R_2$ ont les significations indiquées dans la revendication 2.

21. Complexe de métaux lourds de colorants réactifs selon la revendication 1.

22. Colorants réactifs selon la revendication 1, dans lesquels D est le reste d'un colorant dioxazinique.

23. Colorants réactifs selon la revendication 22, dans lesquels D est le reste d'un colorant dioxazinique répondant à la formule

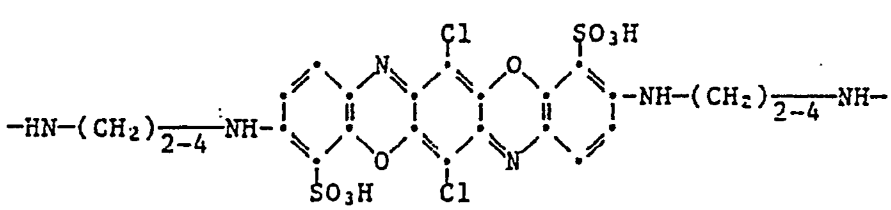

24. Colorants réactifs selon la revendication 1, dans lesquels Z est le groupe β-sulfatoéthyle, β-chloréthyle ou vinyle.

25. Procédé de préparation de colorants réactifs selon la revendication 1, caractérisé en ce qu'on fait réagir un colorant organique répondant à la formule

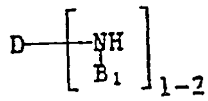

(16)

ou un précurseur du colorant, au moins un équivalent d'une s-triazine répondant à la formule

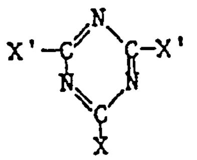

(17),

et au moins un équivalent d'une amine répondant à la formule

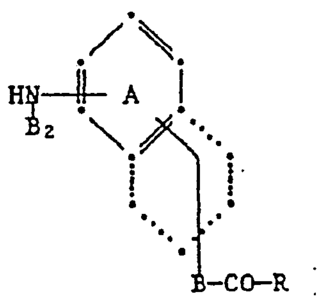

(18)

dans un ordre quelconque, pour obtenir un colorant réactif répondant à la formule (1), D, $B_1$, $B_2$, B, R et A ayant les significations indiquées dans la revendication 1 et X et X′ ayant indépendamment l'un de l'autre une des significations indiquées dans la revendication 1 pour X ; ou, dans le cas de l'utilisation de précurseurs des colorants, on transforme les produits intermédiaires obtenus en les colorants finaux désirés.

26. Procédé selon la revendication 25, caractérisé en ce qu'on condense un colorant répondant à la formule

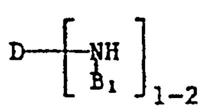

(16)

d'abord avec un dérivé réactif de la s-triazine répondant à la formule

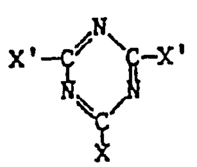

(17)

puis on condense le composé obtenu répondant à la formule

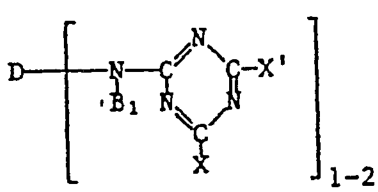

(19)

avec une amine répondant à la formule

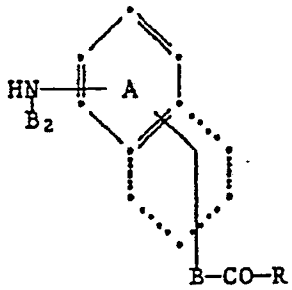

(18)

pour obtenir un colorant réactif répondant à la formule (1).

27. Procédé selon la revendication 25, caractérisé en ce qu'on fait réagir un constituant du colorant répondant à la formule (1), qui contient un radical répondant à la formule

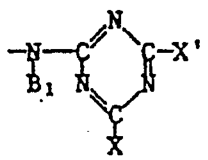

(20)

avec un second constituant nécessaire pour la préparation du colorant, qui contient le cas échéant un radical répondant à la formule (20), et on condense le colorant ainsi obtenu répondant à la formule

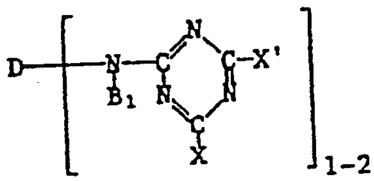

(19)

avec une amine répondant à la formule

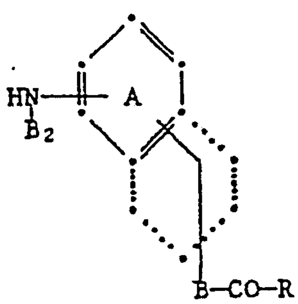

(18)

28. Utilisation des colorants réactifs selon la revendication 1, pour la teinture ou l'impression de matières fibreuses cellulosiques.

29. Utilisation selon la revendication 28, pour la teinture ou l'impression du coton.